(19) **Europäisches Patentamt / European Patent Office / Office européen des brevets**

(11) **EP 2 186 328 B1**

(12) **EUROPEAN PATENT SPECIFICATION**

(45) Date of publication and mention
of the grant of the patent:
**12.03.2014 Bulletin 2014/11**

(51) Int Cl.:
*H04N 5/783* (2006.01)     *H04N 9/804* (2006.01)
*H04N 7/16* (2011.01)      *G11B 27/00* (2006.01)

(21) Application number: **07805783.3**

(22) Date of filing: **29.08.2007**

(86) International application number:
**PCT/JP2007/000928**

(87) International publication number:
**WO 2009/028012 (05.03.2009 Gazette 2009/10)**

(54) **METHOD FOR GENERATING VIDEO DATA FOR TRICK PLAY**

VERFAHREN ZUR ERZEUGUNG VON VIDEODATEN FÜR SPEZIALWIEDERGABE

PROCEDE PERMETTANT DE GENERER DES DONNEES VIDEO DE LECTURE SPECIALE

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**19.05.2010 Bulletin 2010/20**

(73) Proprietor: **Thomson Licensing
92130 Issy-les-Moulineaux (FR)**

(72) Inventors:
• **TAKEMOTO, Akira
Kobe-shi
Hyogo 651-2241 (JP)**

• **KINOUE, Hiroyasu
Kobe-shi
Hyogo 651-2241 (JP)**
• **ISAJI, Yutaka
Kobe-shi
Hyogo 651-2241 (JP)**

(74) Representative: **Hartnack, Wolfgang
Deutsche Thomson OHG
European Patent Operations
Karl-Wiechert-Allee 74
30625 Hannover (DE)**

(56) References cited:
**WO-A-98/48573      WO-A-2005/036884
WO-A2-02/35832     JP-A- 10 336 586
US-A- 5 845 042**

**Description**

**Technical Field**

The present invention relates to a trick play of digital video data.

**Background Art**

A fast-forward mode or a reverse mode is known as a trick mode among reproduction modes of digital video data. The Patent Citations 1 and 2 disclose techniques which provide higher quality images using the trick mode reproduction process.

The Patent Citation 1 discloses a method whereby separate trick play data that is only for reproduction in a fast-forward mode and in a fast-reverse mode is prepared in addition to normal play data to enable the switching of signals to be read-out depending on the reproduction modes requested from a terminal. The trick play data for fast-forward reproduction at n-times play speed has frame numbers of 1, n+1, 2n+1... Such a method enables a quick switch from a normal mode to a trick mode and vice versa, and, shortens the time for reading-out the data.

The Patent Citation 2 discloses an apparatus for reproducing encoded video data utilizing the Motion Picture Coding Experts Group (MPEG) video compression protocol. This apparatus reproduces encoded video data in a fast-forward mode at n-times play speed by only decoding I-pictures and P-pictures when the frame interval of anchor frames is n (n=2, 3). This apparatus also performs fast-forward playback at twice the play speed by outputting the same frame twice for every two frames when the frame interval of the anchor frames equals three. The frame interval of the anchor frames is a frame interval between I-picture and P-picture or a frame interval between P-pictures.

Patent Citation 1: Japanese Laid Open Patent H06-133262
Patent Citation 2: Japanese Laid Open Patent H11-155129
Patent citation 3: WO-A-02/35832

**Disclosure of Invention**

**Technical Problem**

A problem occurs when using the process for controlling trick play described in Patent Citation 1. The method of Patent Citation 1 removes frames at a regular frame interval and decodes the remaining frames as sequential frames. Therefore, the application of this method to encoded video data utilizing inter-frame compression is difficult.

The reproduction apparatus described in Patent Citation 2 can reproduce encoded video data utilizing inter-frame compression. However, this apparatus reproduces I-pictures and P-pictures only. Therefore, the reproduction apparatus outputs the same frame repeatedly when outputting anchor frames in display order causing the reproduction at a speed that is faster than a desired speed. For example, this can occur when a frame interval of anchor frames is three and twice the play speed is desired for reproduction in a fast-forward mode. In this case, a display control is required at the reproduction apparatus so that it repeatedly outputs the same frame once every two frames. Thus, a conventional MPEG decoder cannot be employed since in order to enable the display control, a M signal indicating the frame interval of anchor frames must be provided by a decoder with a display control unit. Moreover, the process of repeatedly outputting the same frame deteriorates image quality at fast-forward playback.

In addition, transmission of an encoded video data stream from a server to the reproduction apparatus adds an extra burden on a network in order to facilitate reproduction at n-times play speed because the steps of skipping B-pictures and selectively decoding I- and P-pictures require all encoded frames, including B-pictures, to be downloaded from the server to the reproduction apparatus over the network and executed at the end of the reproduction apparatus. Accordingly, it is necessary to transmit the encoded video data at n-times speed over the network in order to achieve reproduction in a fast-forward mode at n-times play speed on the reproduction apparatus.

Patent Citation 3 discloses a method according to the preamble of claim 1.

The object of the present invention therefore, is to provide an apparatus for reproducing encoded video data utilizing inter-frame compression capable of producing smoother trick play performance. Another object of the present invention is to avoid placing additional load on a network when transmitting an encoded video data stream in order to achieve a trick play operation.

**Technical Solution**

The present invention provides a data generating method including the steps of generating normal play data by encoding low-compression or non-compression video data, and generating fast-forward data. Each intra frame in the normal play data and each intra-frame in the fast-forward data have the same relative address which is relative to the heads of the normal play data and the fast-forward data respectively. The normal play data includes intra frames and non-intra frames. The intra frames are decoded independently. The non-intra frames are decoded by referencing preceding and/or subsequent frames. The fast-forward data includes intra frames in the normal play data, a part of non-intra frames in the normal play data, and dummy data. The dummy data replaces the other non-intra frames which are included only in the normal play data.

The fast-forward data may be generated by selectively obtaining a part of the non-intra frames and the intra frames while the non-intra frames and intra frames are being generated one after another in the step of generating the normal play data.

The fast-forward data may be generated by removing a part of the non-intra frames in the normal play data after generating the normal play data, and inserting dummy data that replaces the removed non-intra frames.

These and other objects, features, aspects and advantages of the present invention will become apparent to those skilled in the art from the following detailed description, which, taken in conjunction with the annexed drawings, discloses a preferred embodiment of the present invention.

**Brief Description of the Drawings**

[fig.1]Fig. 1 is a simplified block diagram of a reproduction system in the first em-bodiment, not part of the present invention.

[fig.2]Fig. 2 shows a simplified block diagram of a hardware structure of a transmission server in Fig. 1.

[fig.3]Fig. 3 shows a simplified block diagram of a hardware structure of a reproduction apparatus in Fig. 1.

[fig.4]Fig. 4 shows a simplified block diagram of a functional structure of the transmission server in Fig. 1.

[fig.5]Fig. 5(A) shows an explanatory view of an original file and Fig. 5(B) shows an explanatory view of a fast-forward file derived from the original file illustrated in Fig. 5(A).

[fig.6]Fig. 6(A) shows another explanatory view of original file and Fig. 6(B) shows another explanatory view of a fast-forward file derived from the original file illustrated in Fig 6(A).

[fig.7]Fig. 7(A) shows a conceptual view of a stream table and Fig. 7(B) shows a conceptual view of an offset table.

[fig.8]Fig. 8 shows a simplified block diagram of a functional structure of the reproduction apparatus in Fig. 1.

[fig.9]Fig. 9 shows a flowchart illustrating an inventive method for generating a trick-play data file executed by the transmission server in Fig. 1.

[fig.10]Fig. 10 shows a flowchart illustrating a method for reading-out and transmitting data files executed by the transmission server in Fig. 1.

[fig.11]Fig. 11 shows a flowchart illustrating a method for reproducing data executed by the reproduction apparatus in Fig. 1.

[fig.12]Fig. 12 shows a simplified block diagram of a hardware structure of a reproduction apparatus in a second embodiment according to the invention.

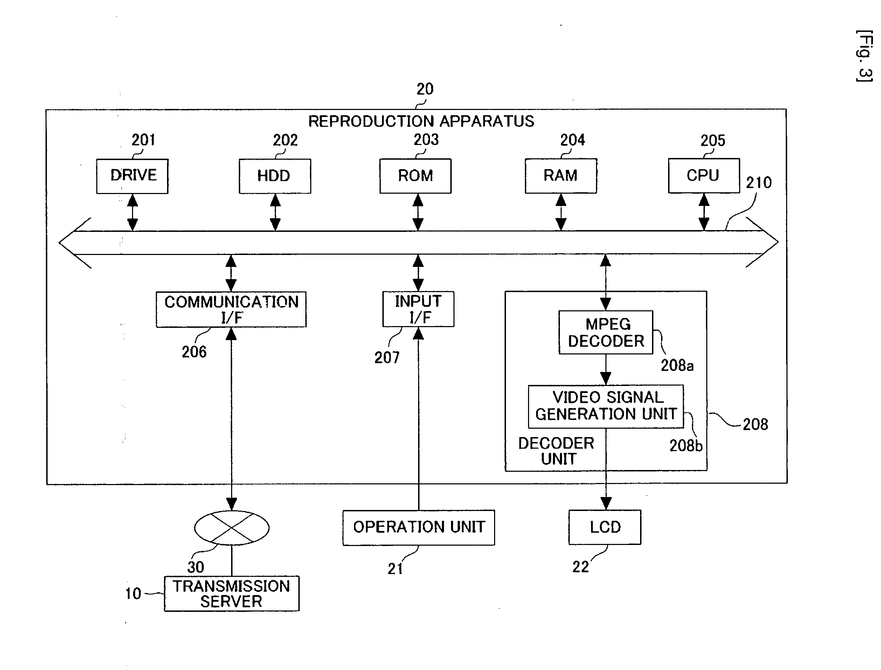

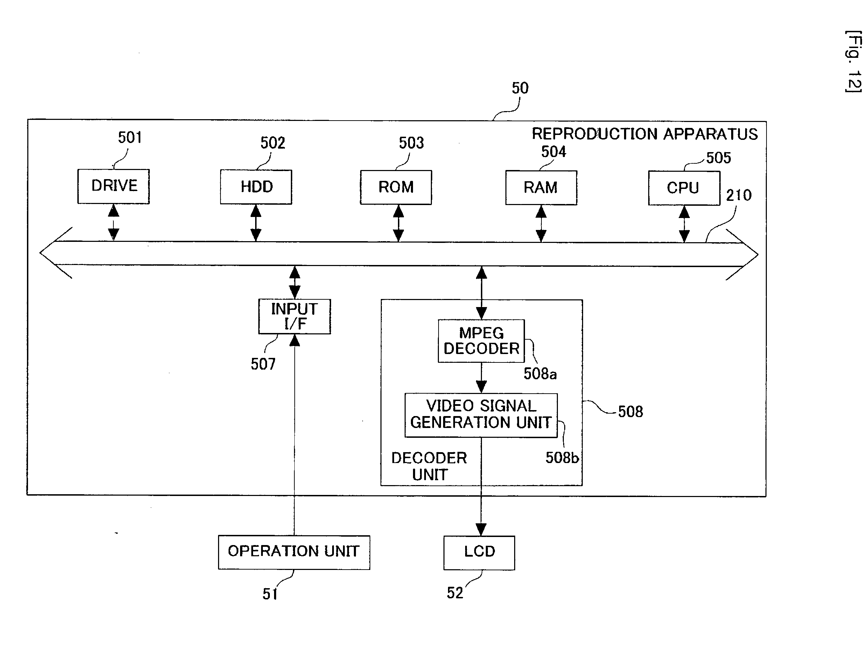

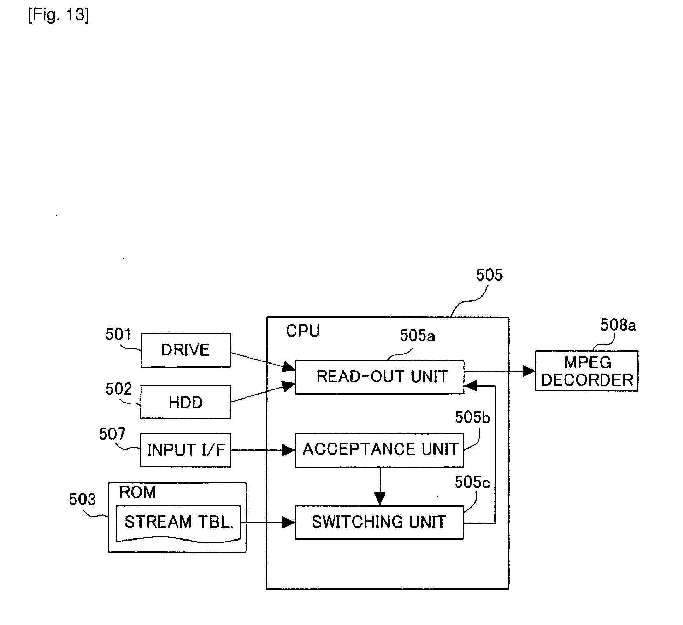

[fig.3]Fig. 13 shows a simplified block diagram of a functional structure of the reproduction apparatus in Fig. 12.

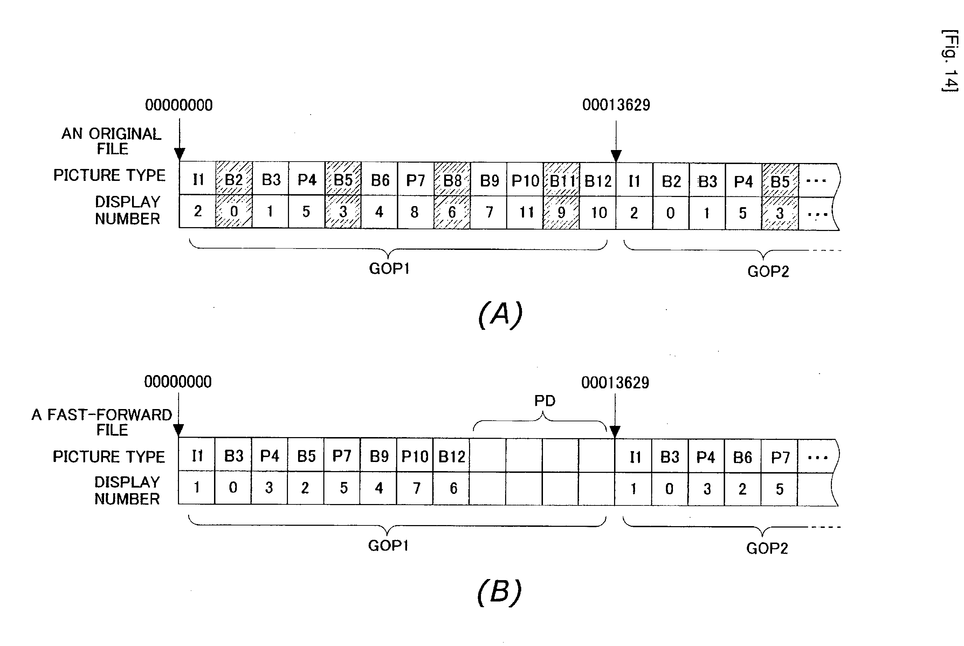

[fig.14]Fig. 14(A) shows an explanatory view of an original file and Fig. 14(B) shows an explanation view of a fast-forward file derived from the original file illustrated in Fig. 14(A).

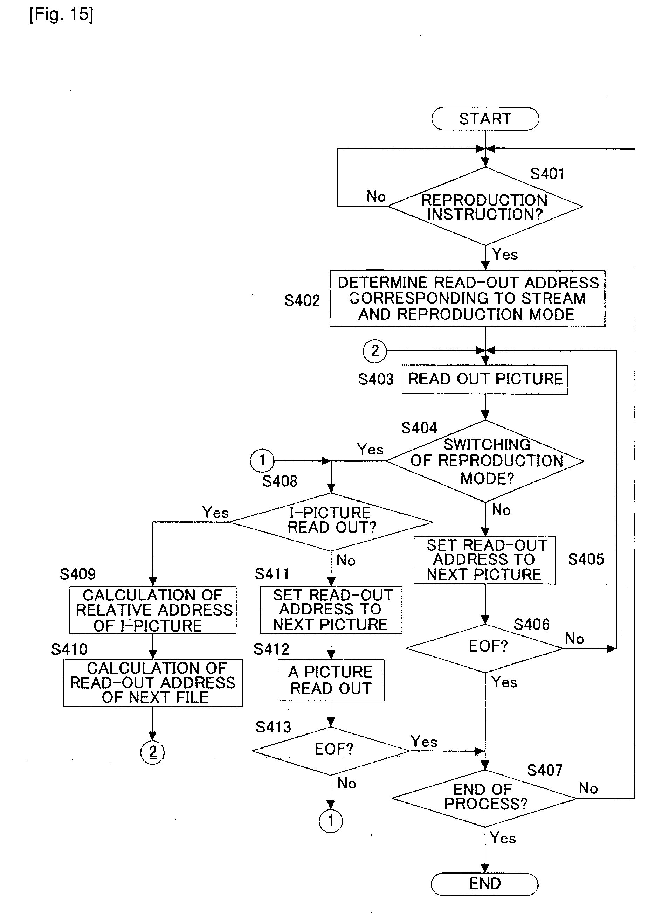

[fig.15]Fig. 15 shows a flowchart illustrating an inventive method for reading-out and reproducing data executed by the reproduction apparatus in Fig. 12.

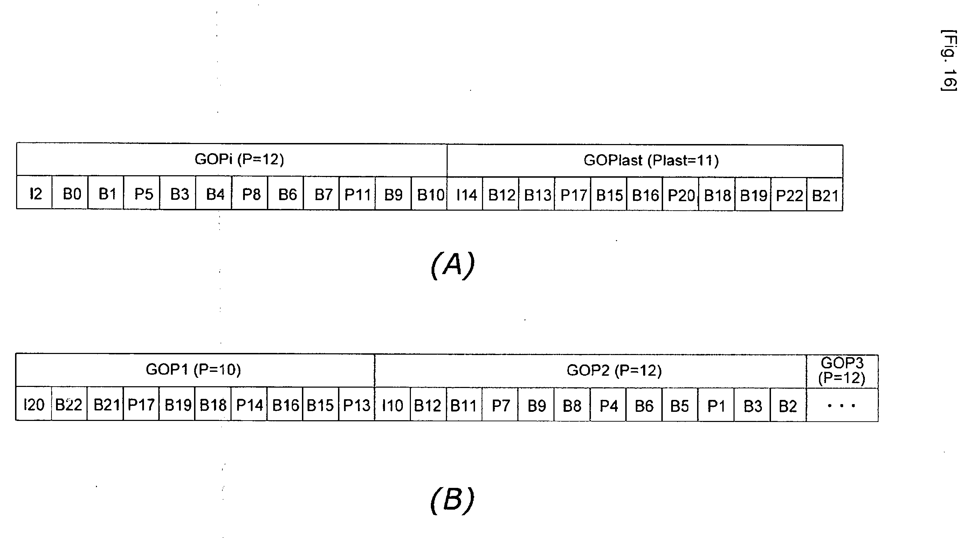

[fig.16]Fig. 16(A) is an explanatory view of an original file derived from a source video data. Fig. 16(B) is an explanatory view of a reverse file derived from the same source video data in Fig. 16(A).

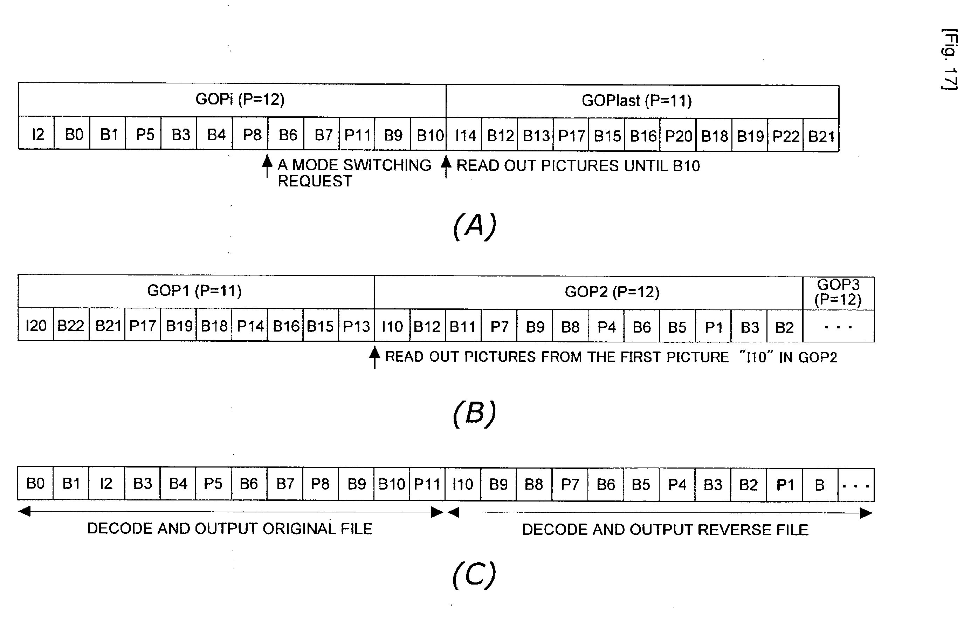

[fig.17]Fig. 17(A) shows pictures read-out from the original file when the reproduction mode is a normal play mode. Fig. 17(B) shows pictures read-out from the reverse file when the reproduction mode is a reverse mode. Fig. 17(C) is an explanatory view of pictures output on the reproduction apparatus before and after the reproduction mode is switched.

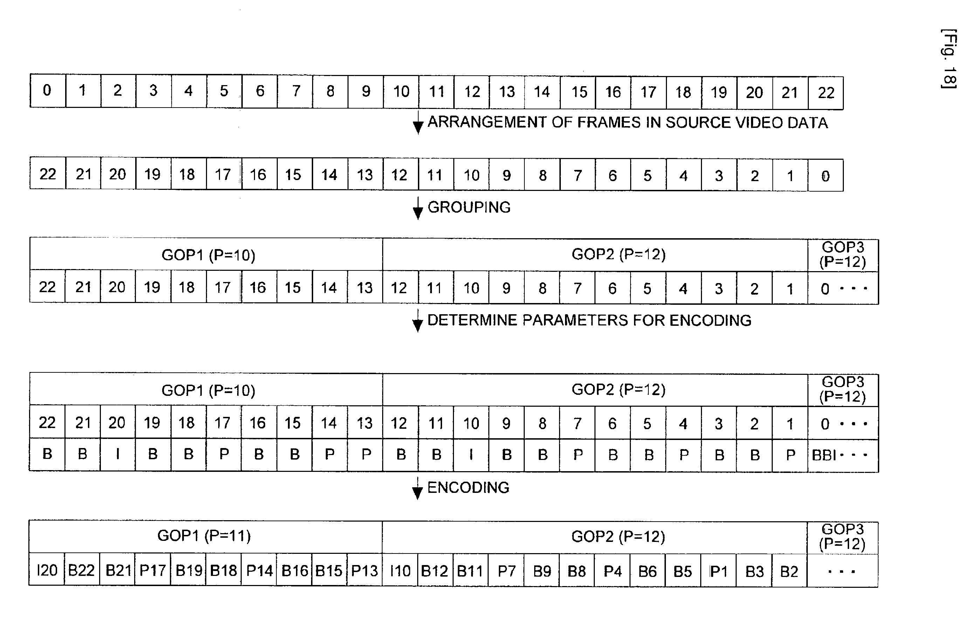

[fig.18]Fig. 18 is an explanatory view of a method for generating a reverse file from a source video data.

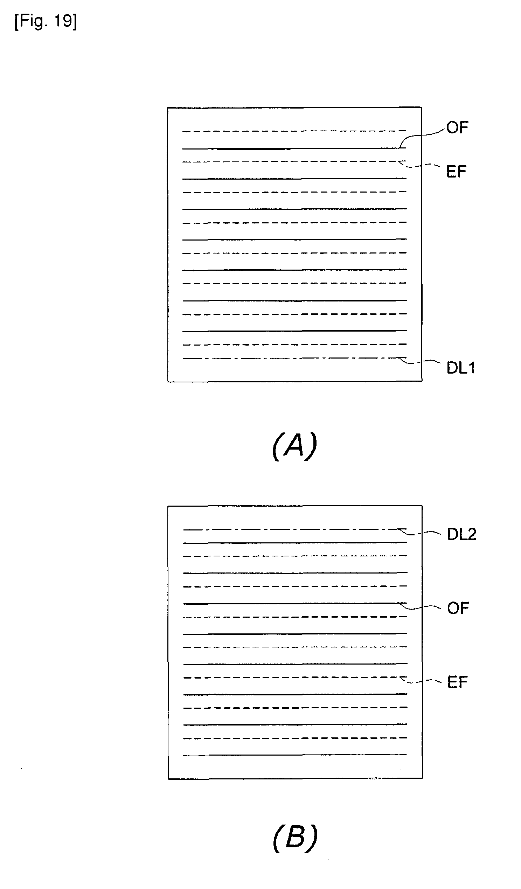

[fig.19]Fig. 19(A) illustrates one method of rearranging fields in each frame and frames. Fig. 19(B) illustrates another method of rearranging fields in each frame and frames.

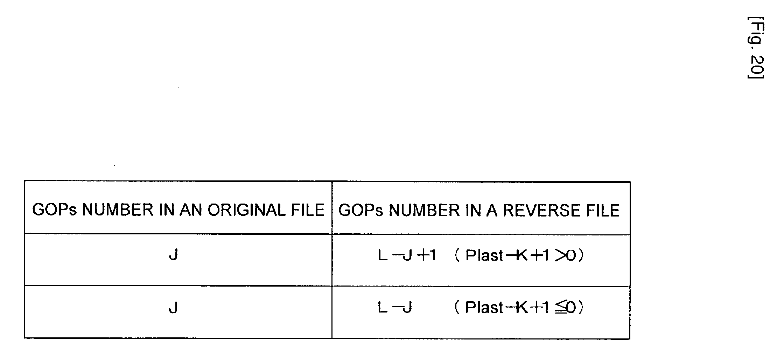

[fig.20]Fig. 20 is an explanatory view of a switching table.

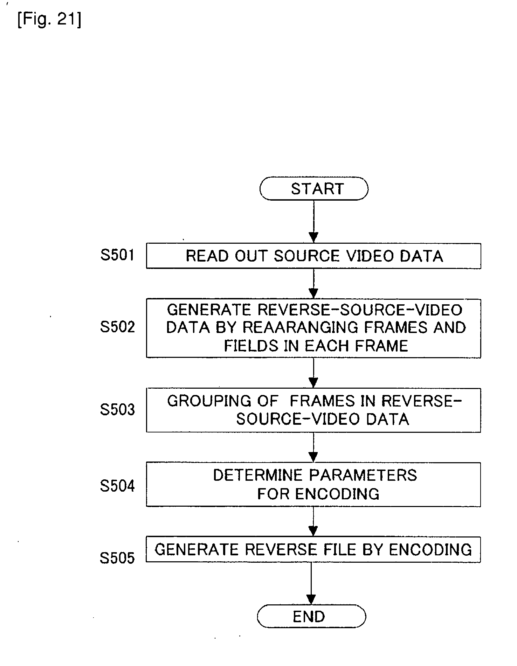

[fig.21]Fig. 21 shows a flowchart illustrating a method for generating a reverse file executed by the transmission server.

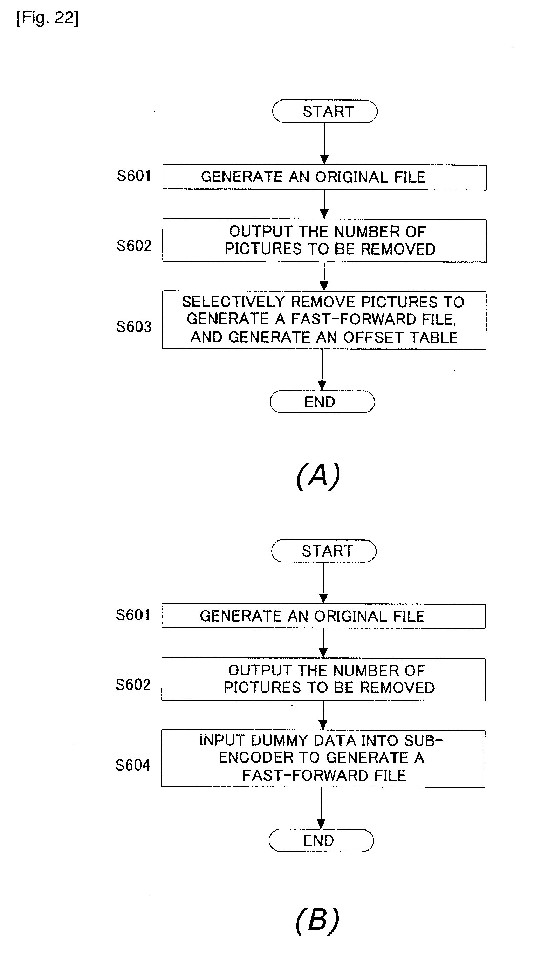

[fig.22]Fig. 22(A) shows a flowchart illustrating another inventive method for generating a trick-play data file and an offset table executed by a computer. Fig. 22(B) shows a flowchart illustrating another inventive method for generating a trick-play data file including dummy data executed by a computer.

**Best Mode for Carrying Out the Invention**

The first embodiment, not part of the invention

The Overview of the present invention

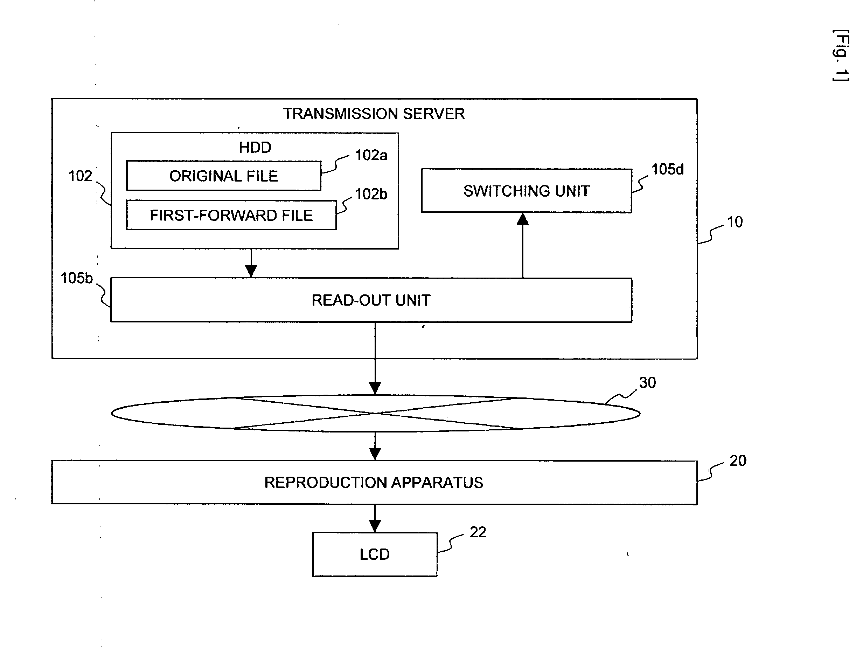

Fig. 1 illustrates a simplified block diagram of a reproduction system 100 in the first embodiment of the present invention. The reproduction system 100 includes a transmission server 10 and a reproduction apparatus 20. The transmission server 10 and the reproduction apparatus 20 are connected via a network 30 and communicate with each other.

The transmission server 10 reads out encoded video data files recorded on a storage medium and transmits a video data stream upon a request from the reproduction apparatus 20. The storage medium may be memory on the transmission server 10 itself or a removable storage medium. Each AV content corresponds to a plurality of encoded video data files generated for different reproduction modes. The transmission server 10 transmits an encoded video data file corresponding to a requested AV content and a requested reproduction mode to the reproduction apparatus 20. In addition, the transmission server 10 switches encoded video data files to be read-out upon a mode switching request from the reproduction apparatus 20. In other words, the transmission server 10 switches a file corresponding to pre-request reproduction mode to a file corresponding to post-request reproduction mode.

A plurality of encoded video data files corresponding to an AV content includes an original encoded data file for normal mode at n=1 (hereinafter, an "original file") and at least one encoded data file for trick-play mode at n- (n=1 or n>1) times play speed (hereinafter, a "trick-play file"). An original file is generated by utilizing a conventional inter-frame compression such as MPEG 2 or MPEG 4. To simplify the following explanation, an original file compressed by MPEG 2 will be used as an example in this embodiment. The trick-play file may be an encoded data file for fast-forward reproduction at n- (n>1) times play speed. The trick-play file may also be an encoded data file for reverse reproduction at n-(n=1) times play speed. A fast-forward file is derived from an original file by removing part of the frames in the original file. Accordingly, the data amount of the fast-forward file is reduced than that of the original file. Therefore, the reproduction apparatus 20 performs reproduction in a fast-forward mode without increasing the read-out speed or the transmission speed of the fast-forward data on the network 30 when the transmission server 10 transmits an encoded video data stream to the reproduction apparatus 20. The term "frame" as used herein refers to the encoded data that can be used to represent an image, and generally corresponds to a picture in MPEG protocol.

Hardware configuration

(1) Transmission Server

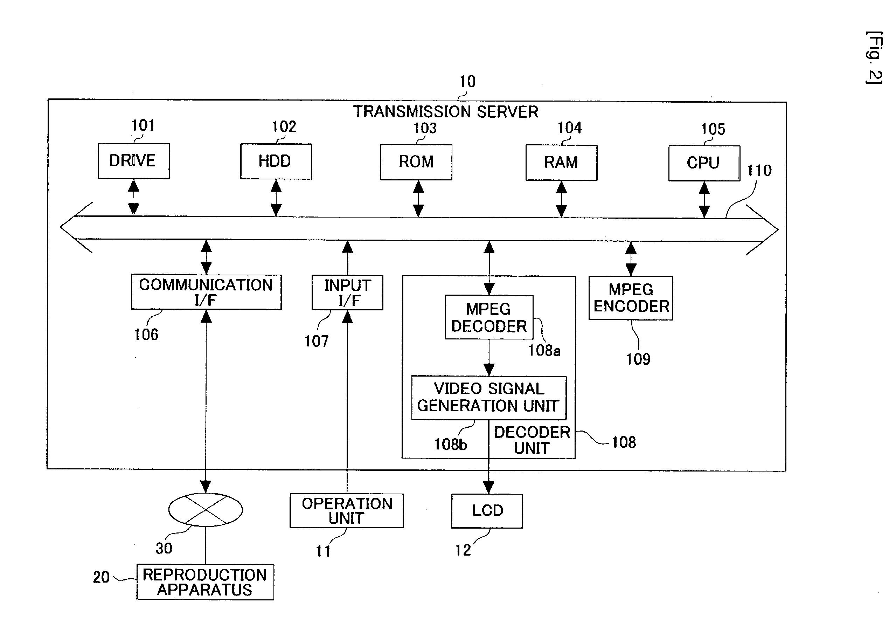

Fig. 2 shows an example of a hardware diagram of the transmission server 10. The transmission server 10 can be configured by a computer. The transmission server 10 includes a drive 101, a hard disk drive (HDD) 102, a ROM 103, a RAM 104, a CPU 105, a communication interface (I/F) 106, an input interface 107, a decoder unit 108, a MPEG encoder 109, and a BUS 110 that connects the above-mentioned elements. In addition to these elements, the transmission server 10 may further include an AV unit (not shown) which obtains analog AV data from outside and converts such analog AV data into digital AV data.

The drive 101 reads out encoded video data files from a removable storage medium. The removable storage medium may include, for example, an optical disk, a magnetic disk, an optical-magnetic disk, a Blu-ray disk, or a semiconductor memory. The drive 101 is an optional element for the transmission server 10. The drive 101, however, enables the transmission server 10 to read-out encoded video data files recorded on the removable storage medium.

The HDD 102 correlatively stores a plurality of encoded video data files and a plurality of voice data files for each AV content. Each encoded video data file and each voice data file correspond to a reproduction mode at a certain play speed. In this embodiment, reproduction is performed either in a normal mode or a fast-forward mode.

The ROM 103 stores control programs and data necessary for executing a control program.

The RAM 104 temporarily stores the data necessary for executing the control program.

The CPU 105 manages the entire operation of the transmission server 10 by executing the control program stored in the ROM 103 or HDD 102 on a volatile memory such as the RAM 104. For example, the CPU 105 manages the drive 101 so as to read-out an original file from a removable disk and write the file onto the HDD 102.

The communication interface 106 transmits data to and receives data from the reproduction apparatus 20 via the network 30. The data sent to and from the reproduction apparatus 20 includes at least the encoded video data files, and may further include a non-compressed video data file from a resource on the network 30.

The input interface 107 accepts a user operation on an operation unit 11 such as a keyboard and/or a mouse.

An operation signal is provided to the CPU 105 via the BUS 110. The input interface 107 is not an essential element of the transmission server 10 of the present invention.

The decoder unit 108 includes an MPEG decoder 108a and a video signal generation unit 108b. The decoder unit 108 is an optional element for the transmission server 10. The decoder unit 108, however, enables the transmission server 10 to decode an encoded video data file. The MPEG decoder 108a decodes MPEG encoded data provided through the BUS 110 according to a command from the CPU 105, and generates digital video data. The digital video data is then provided to the video signal generation unit 108b. The video signal generation unit 108b converts the digital video data into display data so that the display data can correspond with the number of pixels of a liquid crystal display (LCD) 12. The generated display data is then outputted to the LCD 12 by a LCD driver (not shown).

The MPEG encoder 109 encodes low-compression or non-compression digital video data into MPEG format data according to a command from the CPU 105. The generated encoded data is stored in the HDD 102 via the BUS 110. The MPEG encoder 109 is an optional element for the transmission server 10 and may be set outside of the transmission server 10.

(2) Reproduction Apparatus

Fig. 3 shows a hardware block diagram of the reproduction apparatus 20 in Fig. 1. In this embodiment, the reproduction apparatus 20 includes a drive 201, a HDD 202, a ROM 203, a RAM 204, a CPU2 05, a communication interface 206, an input interface 207, a decoder unit 208, a MPEG encoder 209, and a BUS 120 that connect the above mentioned elements.

The drive 201 reads out encoded data files from a removable storage medium such as an optical disk. The removable medium has correlatively recorded thereon encoded video data files and voice data files for an AV content. In this embodiment, the drive 201 is an optional element for the reproduction apparatus 20. The drive 201, however, enables the reproduction apparatus 20 to read-out encoded video data recorded on a removable medium for reproduction.

The HDD 202 correlatively stores a plurality of encoded video data files and voice data files for an AV content. Each encoded video data file and each voice data file correspond to a reproduction mode at a certain play speed. In this embodiment, the HDD 202 is an optional element for the reproduction apparatus 20. The HDD 202, however, enables the reproduction apparatus 20 to record an encoded video data read-out from the drive 201 or received from the transmission server 10 onto the HDD 202 so as to perform reproduction.

The ROM 203 stores a control program and data necessary for executing a control program.

The RAM 204 temporarily stores the data necessary for executing the control program.

The CPU 205 executes the control program stored in the ROM 203 on a volatile memory such as the RAM 204, and manages the entire operation of the reproduction apparatus 20. For example, the CPU 205 manages the communication interface 206 so that it receives an encoded video data stream from the transmission server 10, and outputs the stream to the decoder unit 208 via the BUS 201.

The communication interface 206 sends and receives the data to and from the transmission server 10 via the network 30. For example, the communication interface 206 receives an encoded video data stream from and sends an operation signal by a user input to the transmission server 10.

The input interface 207 accepts a user operation on an operation unit 21 such as a keyboard and/or a mouse. An operation signal is output to the CPU 205 via BUS 210.

The decoder unit 208 includes an MPEG decoder 208a and a video signal generation unit 208b. The MPEG decoder 208a decodes MPEG format encoded data that is input through the BUS 210 in response to a command from the CPU 205, and generates digital video data. The digital video data is provided to the video signal generation unit 208b. The video signal generation 208b converts the digital video data into display data so that the display data can correspond with the number of pixels of a LCD 22. The generated display data is then output to the LDC 22 by a LCD driver (not shown).

Functional Configuration

[1] Function configuration of the transmission server

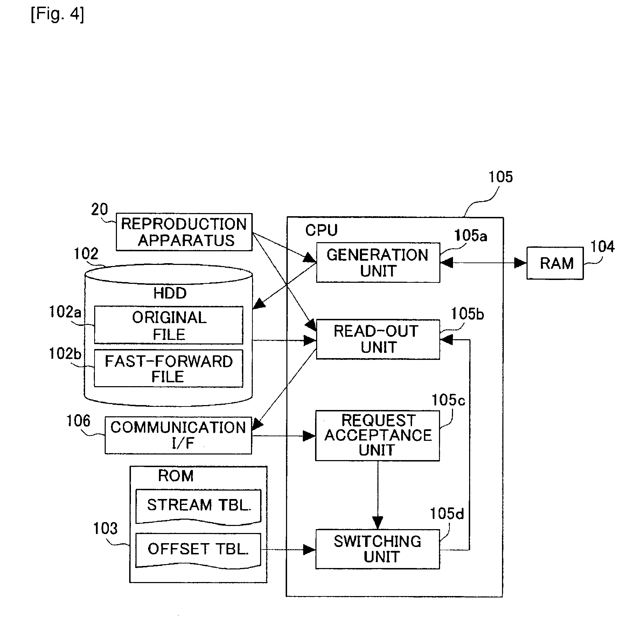

Fig 4 shows a block diagram of a functional configuration of the transmission server 10. The CPU 105 in the transmission server 10 enables the transmission server 10 to operate as a generation unit 105a, a read-out unit 105b, a request acceptance unit 105c (a "change acceptance unit" in the claims), and a switching unit 105d (a "data switching unit" in the claims). The process of transmitting the trick play data by server 10 to the reproduction apparatus 20 will be explained first, and then, the tables stored in the transmission server 10, and finally, each function of the transmission server 10.

[1-1] An Original File and a Fast-Forward File

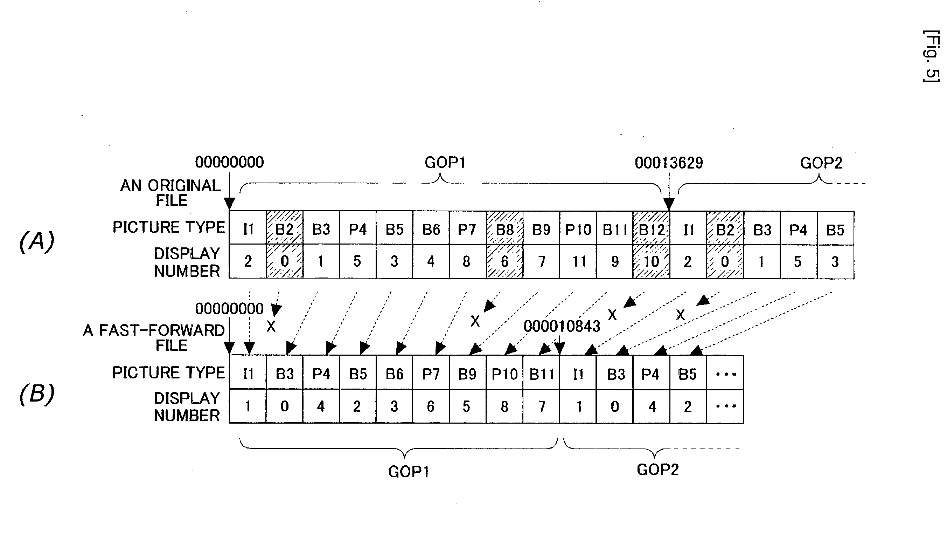

Fig. 5(A) is an explanatory view of an original file. Fig. 5(B) is an explanatory view of a fast-forward file which is derived from the original file illustrated in Fig. 5 (A). Figs. 5(A) and 5(B) also illustrate how to generate a fast-forward file based on an original file. These files are recorded on a storage medium such as a removable storage medium or a hard disk.

The original file is for reproduction in a normal mode at n-(n=1) times play speed and is generated by inter-frame compression of an AV data which is compressed at low-compression rate or is non-compression data. Examples of inter frame compression technique include MPEG 2 and MPEG 4. In this embodiment, as mentioned previously, an original file is an inter-frame MPEG-compressed data file which includes I-pictures, B-pictures, and P-pictures. An I-picture can be decoded independently, whereas a B-picture is encoded by making reference to preceding and/or subsequent pictures. A P-picture is encoded by making a reference only to preceding pictures and can therefore be decoded by making a reference to preceding pictures only. P-pictures and B-pictures in a GOP (group of pictures) may refer to another picture in another GOP (hereinafter an "open-GOP file"). On the contrary, P-pictures and B-pictures in a GOP may only refer to another picture in the same GOP (hereinafter a "closed-GOP file").

A fast-forward file is for a fast-forward playback at n-times speed (n>1) in a fast-forward mode. A plurality of fast-forward files can be generated for different play speeds. In this case, a file is read-out according to a designated reproduction mode and a designated play speed.

Fig 5(A) shows an original file, and Fig. 5(B) shows a fast-forward file. Picture numbers that are illustrated in Figs. 5(A) and 5(B) such as I1, B2, B3, P4... are assigned to each picture and are serial numbers starting from "1" in each group of pictures and are in order of stream sequences. In other words, picture numbers indicating the order in each GOP show the order in which the pictures should be read-out, both encoded and decoded. Hence, each display number in Figs. 5(A) and 5(B) indicates the order in a GOP in which each picture should be displayed.

The original file in Fig. 5(A) illustrates the picture numbers showing the order for the pictures to be read-out, picture types, and display numbers. Shadowed squares such as B2, B8 and B12 are the pictures to be removed, as further described below. The numbers "00000000" and "00013629" in Fig. 5(A) show relative addresses of each I-picture, which are addresses relative to the head of the original file.

The generation of the fast-forward file is illustrated in Fig. 5(B). The fast-forward file is generated by removing B2, B8 and B12-pictures from each GOP in the original file. Here, the number of pictures included in the GOP decreases from 12 to 9. Therefore, this fast-forward file facilitates reproduction in a fast-forward mode at about 1.3 times play speed even without increasing the speed of transmission over the network 30 for reading-out and decoding the data. The numbers "00000000"and "00010843" in Fig. 5(B) show the relative addresses of each I-picture that are relative to the head of the original file.

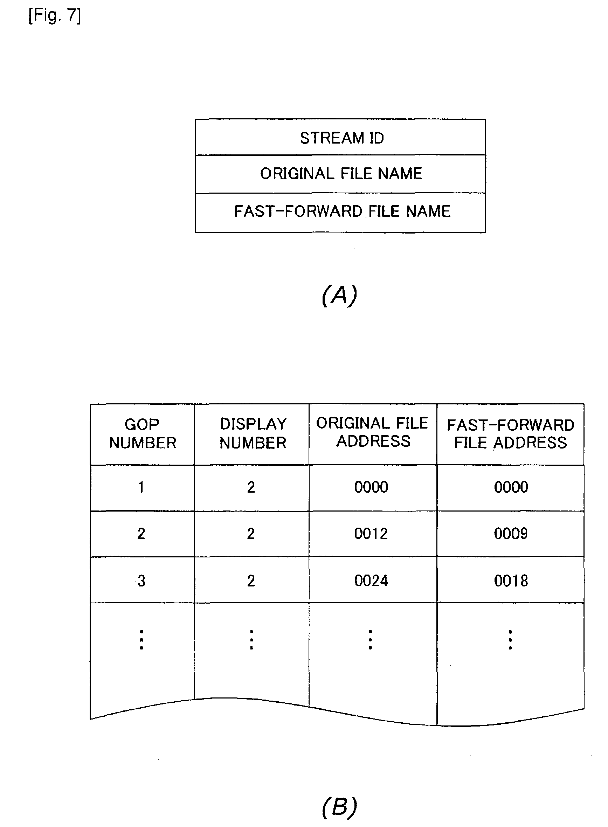

The relative address of an I1-picture, which is the address relative to the head of a file, is always "00000000" in every file. While the relative addresses of a corresponding I2-picture is "00013629" in the original file and "00010843" in the fast-forward file, the relative addresses of the corresponding I2-picture has two addresses, one that is relative to the head of the original file and the other that is relative to the head of the fast-forward file. Relative addresses of a corresponding I-picture included in different files are associated with each other in an offset table (Fig. 7) as further described below.

Some pictures in each GOP of the fast-forward file have different display numbers from those in the original file. This is because new display numbers are assigned to each picture in the fast-forward file so that the display numbers are consecutive numbers beginning with zero in each GOP.

For example, pictures with display numbers "1" to "5" in the original file correspond to the pictures with display numbers "0" to "4" in the fast-forward file. These pictures in the fast-forward file have display numbers that are one less than the display numbers in the original file. Likewise, the pictures of display numbers "7" to "9" in the original file correspond to the pictures of display number "5" to "7" in the fast-forward file. In this case, these pictures in the fast-forward file have smaller display numbers that are two less than the picture numbers in the original file. Likewise, the picture of display number "11" in the original file is corresponding to the picture of the display number "8" in the fast-forward file. This picture in the fast-forward file has a display number that is three less than the picture numbers in the original file.

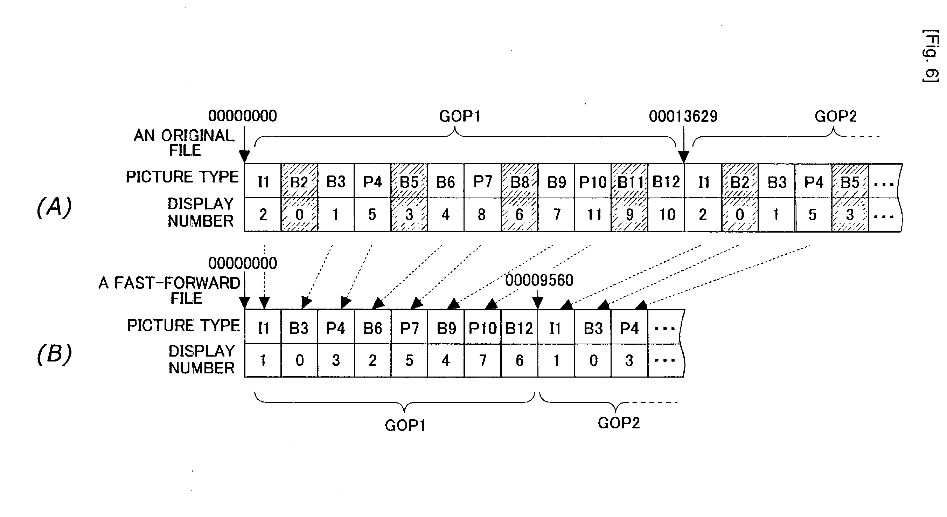

Fig. 6(A) shows the same original file as in Fig. 5(A). Fig. 6(B) shows another fast-forward file derived from the original file illustrated in Fig. 6(A). This fast-forward file is generated by removing 4 pictures from each GOP having 12 pictures in the original file and thus, facilitates reproduction in a fast-forward mode at 1.5 times play speed. As mentioned previously, the relative addresses of the corresponding I-pictures are stored correlatively in an offset table, and the display order in each GOP is newly assigned in the fast-forward file.

Only one fast-forward file appears to be generated from an original file in the above-mentioned Fig. 5 and Fig. 6. However, a plurality of fast-forward files for different trick play speeds can be generated from the one original file.

The above-mentioned fast-forward file can be decoded by a conventional MPEG decoder. Moreover, the data amount of the fast-forward file is less than the data amount of the original file. This is because the fast-forward file is generated by removing several pictures from the original file. Therefore, the fast-forward file facilitates reproduction in a fast-forward mode at n-times play speeds (n>1) without increasing the data transmission speed of the transmission server 10 or the network 30, or the reproduction speed at the reproduction apparatus 20 when being transmitted from the transmission server 10 to the reproduction apparatus 20.

[1-2] Tables

Figs. 7(A) and 7(B) show a conceptual view of tables stored in the ROM 103 of the transmission server 10. Fig. 7(A) is a stream table, and Fig. 7(B) is an offset table.
The stream table associates an original file with at least one fast-forward file which is generated based on the original file. These associated files correspond to the same AV content. In this embodiment, the stream table associates an original file with a fast-forward file.
The stream table correlatively stores a "stream ID", an "original file name" and a "fast-forward address". The "stream ID" indicates an identifier of an AV content. The "original file name" indicates the name of an original file. The "fast-forward file name" indicates the name of a fast-forward file.
The stream table can further associate play speeds with the above mentioned data. This enables the stream table to correlate a plurality of fast-forward files for different play speeds generated from the same original file. In this case, the stream table associates the head address of an original file, the head addresses of each fast-forward file and play speeds. In addition to play speeds, the stream table can associate a voice data file for n-times speed playback with a fast-forward file for n-times speed playback (not shown).
Fig. 7(B) is an offset table that associates the address of an I-picture in the original file with the address of a corresponding I-picture in a fast-forward file. In this embodiment, relative addresses, in other words, offset values, of each I-picture in each file are associated with each other in a record. More specifically, this offset table stores a "GOP number," a "display number," an "original file address," and a "fast-forward file address" in a record.
The "GOP number" specifies a GOP in each file and the "display number" indicates the display order in each GOP. The "display number" can be omitted when each GOP includes only one I-picture. The "display number" or other information is used to distinguish I-pictures in each GOP when a plurality of I-pictures is included in each GOP. The "original file address" indicates an address of an I-picture relative to the head of the original file. The " fast-forward file address" indicates an address of a corresponding I-picture relative to the head of the fast-forward file. The original file address and the fast-forward file address are an offset value relative to the head of each file.
The offset table of Fig. 7(B) facilitates a switching of read-out points from an I-picture address in a file to the corresponding I-picture address in another file.

[1-3] Functions

(a) Generation unit

The generation unit 105a generates a fast-forward file by removing pictures from the picture sequence of an original file to reduce the amount of data. The generated fast-forward file is recorded on a storage medium, such as a removable storage medium and the HDD 102, by the generation unit 105a. In this invention, to simplify the explanation, a case where the generated fast-forward file is recorded on the HDD 102 together along with the original file will be considered as follows. Although the generation unit 105a is an optional element for the transmission server 10, it nevertheless enables the transmission server 10 to generate a fast-forward file.
The removed pictures by the generation unit 105a are pictures other than ones which can be decoded independently. In other words, the generation unit 105a removes pictures other than I-pictures. In this embodiment, pictures to be removed from the original file are a part or all of B-pictures. The number of pictures to be removed "Ne" from each GOP is determined based on the following formula.

$$\text{Math. 1}$$
$$N_{gop}/R = N_{gop} - N_e$$

(with R beplay speed)
Preferably, removal of B-pictures from the original file is accomplished so that the intervals between the removed pictures are as uniform as possible along with the picture sequence in the original file. By doing so, deterioration of image quality during reproduction is prevented. Therefore, the generation unit 105a preferably removes a B-picture at every "S" picture in the sequence of the pictures in the original file. Here, the number "S" indicates a skip number which can be calculated based on the number of pictures to be removed "Ne." The skip number "S"can be calculated according to the following formula:

$$\text{Math. 2}$$
$$S = Ngop/Ne$$

After removing B-pictures, a new display number is assigned to each picture remaining in the file. Display numbers in each GOP are serial numbers starting from zero.

(b) Read-Out Unit

The read-out unit 105b reads out a file from the HDD 102 that corresponds to a stream ID and a reproduction mode requested from the reproduction apparatus 20. The file is read-out from a read-out address designated by the switching unit 105d. The read-out unit 105b switches the files to be read-out from the current file to a next file upon receiving an instruction of reading-out the next file along with a read-out address thereof while reading-out the current file. In other words, the read-out unit 105b stops reading-out the current file and starts reading-out the next file from the designated read-out address.

(c) Request Acceptance Unit

The request acceptance unit 105c receives a transmission request and a mode switching request from the reproduction apparatus 20. The transmission request and the mode switching request include at least a communication address of a sender, a stream ID, and a reproduction mode. The reproduction mode is either a normal mode or a fast-forward mode in this embodiment.

(d) Switching Unit

(d-1) A notification of Read-Out Address of a File

The switching unit 105d determines the file to be read-out upon the transmission request from the reproduction unit 20, and notifies the head address of a file to the read-out unit 105b. The transmission request from the reproduction apparatus 20 includes at least a stream ID and a reproduction mode.
The switching unit 105d determines the file to be read-out next upon receiving the mode switching request, and notifies the read-out unit 105b of a read-out address of a next file to be read-out next. This notification is performed while a current file is being read-out. The mode switching request from the reproduction apparatus 20 includes at least a stream ID and a reproduction mode.

(d-2) Determination of Switching Position of Files

The switching unit 105d determines the switching positions of files. The switching unit 105d preferably determines two I-pictures in the current file and the next file as switching positions. The two I-pictures are identical with each other and are arranged in the current file and the next file respectively. Switching at these two con-esponding I-pictures facilitates smoother playback when switching the reproduction modes. This is because each I-picture is decoded independently and the decoded data of an I-picture in a file is identical with the decoded data of the corresponding I-picture in another file. For example, in Fig. 5, when a fast-forward mode is requested after reading-out and transmission of the P7-picture in the original file, the I1-pictures in both the original and fast-forward files of the next GOPs (GOP2s) are determined as switching positions. These I1-pictures are I-pictures to be read-out after the P7-pictures in both files. Here it should be noted that the B9-, P10-, B11-pictures arranged in both files and read-out after the P7-pictures are not determined as switching positions.
The switching position in the current file is preferably a first I-picture to be read-out after receiving the mode switching request so that there would be a minimal lag between the receptions of the mode switching request. The switching position in the next file is a corresponding I-picture which is identical to the I-picture of the switching point in the current file. Again, using Fig. 5 as an example, when a fast-forward mode is requested after reading-out the B2-picture in the original file, the I1-picture in GOP2 will be determined as a switching position in the current file. The I1-picture is the first I-picture to be read-out after the B2-picture.

(d-3) Calculation of a Read-Out Address

A reading-out position of the next file is calculated based on the calculated switching position of the current file. Another switching position of the next file, namely the address, is obtained from the offset table. The switching unit 105d reads out the relative address of the I-picture in the next file from the offset table. Here, the I-picture in the next file is identical to the I-picture in the current file which also is the switching position in the current file. The reading address of the next file is calculated based on the relative address that has been read-out and the head address of the next file. The I-pictures of both switching positions can be read-out from either one of the current file or the next file. The method of obtaining the relative address of an I-picture based on the offset table has an advantage of conserving memory space for storing the fast-forward file as compared with a method of using dummy data, which is described below.

(2) The Reproduction Apparatus

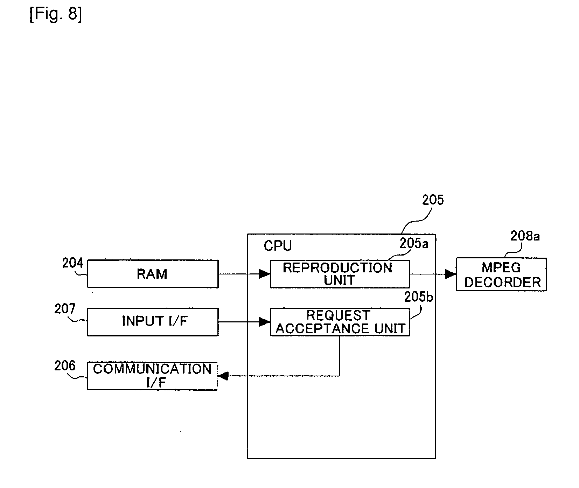

Fig. 8 shows a functional block diagram of the reproduction apparatus 20. The CPU 205 of the reproduction apparatus 20 enables the reproduction apparatus 20 to operate as a reproduction unit 205a and a request acceptance unit 205b, which are explained below.

(a) The Reproduction Unit

The reproduction unit 205a sends a command requesting the reproduction of an encoded stream from the transmission server 10 to the MPEG decoder 208a. The MPEG decoder 208a then starts decoding and reproducing pictures from the communication interface 206 one after another upon receiving the command, and stops decoding and reproduction upon receiving a "stop" command. The reproduction unit 205a may also send a command to the MPEG decoder 208a requesting the decoded data that has been read-out from a removable disk in the drive 201 or from the HDD 202. This enables the reproduction apparatus 20 to playback encoded data recorded on the removable disk or the HDD 202.

(b) The Request Acceptance Unit

The request acceptance unit 205b accepts designation of stream ID and reproduction mode via the input interface 207, and sends the designated stream ID and reproduction mode to the transmission server 10.

Process

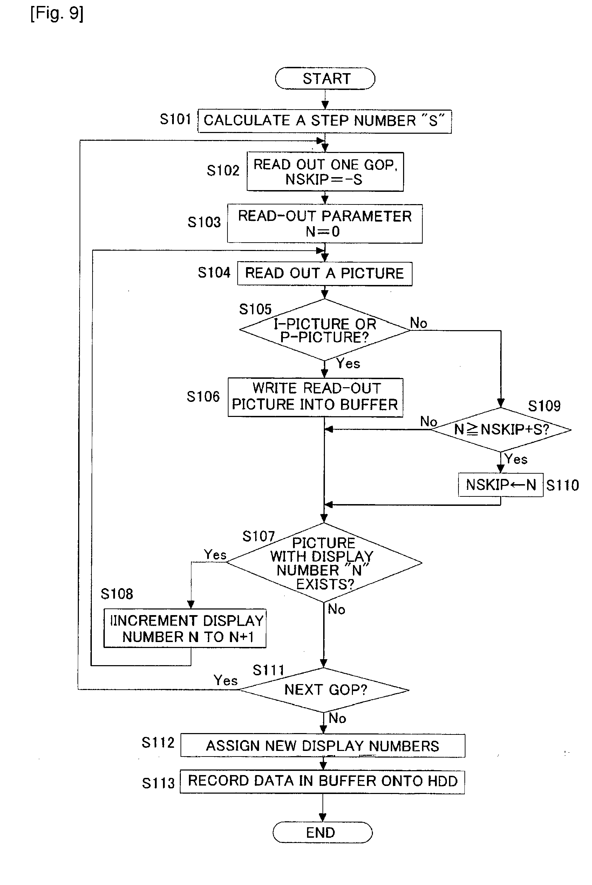

Hereinafter, an explanation of the process executed in the reproduction system 100 will be given using Figs. 9-11.

[1] Processes by the Transmission Server

The transmission server 10 executes at least a transmission process. In this embodiment, the transmission server 10 also executes a data generation process. It should be noted that the file generation process may be executed not only on the transmission server 10 but also on another computer terminal.

[1-1] A Data Generation Process

Fig. 9 illustrates a flow chart of an embodiment of the data generation process executed by the CPU 105 in the transmission server 10. This process is to generate fast-forward file. This process may be started upon obtaining new non-encoded AV data or low-compression AV data. This process may also be stared upon obtaining or generating a new original file. In this embodiment, suppose that the CPU 105 generates data for fast-forward reproduction after generating MPEG2 data of an original file and recording the file on the HDD 102.

Step S101: The CPU 105 calculates a step number S. The CPU 105 generates the data for a fast-forward reproduction by removing a picture at every "S" picture. In addition, the CPU 105 executes the following initiation processes where the CPU 105 sets a read-out address of the HDD 102 at the head of the original file. The CPU 105 generates a buffer in a volatile memory such as the RAM 104 so that the data for fast-forward reproduction is temporarily recorded during the data generation process.
Step S 102: The CPU 105 reads out the data of one GOP from the original file. Such read-out GOP is called "current GOP" hereinafter. The CPU 105 sets an initial value of the skip number "Nskip" at "-S". The skip number "Nskip" indicates the display number of the picture which is last removed among the pictures in the current GOP.

Step S 103: The CPU 105 initiates a read-out parameter and sets its value "N" to "0". The value of the read-out parameter "N" indicates a display number of a picture to be read-out next. The read-out parameter is used in the following steps to determine which picture should be removed or not.

Step S104: The CPU 105 reads out a picture with display number "N" from the RAM 104.

Step S105: The CPU 105 determines whether the read-out picture is an I-picture or P-picture.

Step S106: If an I-picture or P-picture is being read-out, the CPU 105 writes the read-out picture into the buffer generated in step S101 since B-pictures are to be removed in this embodiment. In a case where the read-out picture is a picture other than an I- or P-picture, namely a B-picture, the process jumps to step S 109 described below.

Step S107: The CPU 105 determines whether a picture with the display number "N+1" exists in the current GOP by referring to the RAM 104.

Step S 108: If a picture with the display number "N+1" exists in the current GOP, the CPU 105 increments the value of the read-out parameter "N" to "N+1" and reads-out a picture having a display number that is "N+1" (S104). If a picture with the display number "N+1" does not exist in the current GOP, the process jumps to Step S111 below.

Step S109: The CPU 105 determines whether a formula mentioned below is met when a B-picture is being read-out. In other words, the CPU 105 determines whether the difference in the display numbers between a last removed B-picture and the B-picture just being read-out is equal to or larger than the skip number "S".

[0088]     Math. 3

$$N >= Nskip + S$$

Step S110: When the above mentioned formula is met, the CPU 105 reads out a next picture without writing the B-picture onto the buffer. The CPU 105 sets the value of skip number "Nskip" to the value "N" of the current display number (Nskip <-- N). Afterwards, the process jumps to the step S107. In this way, a B-picture is removed from the original file at every "S" picture in a display order.

Step S111: The CPU 105 determines whether the next GOP exists or not by referring to the address that is one GOP ahead. If the next GOP is found, the CPU 105 executes the above mentioned steps S102-S110 for the next GOP. If the next GOP does not exist, it means that the B-pictures were removed from all of the GOPs in the original file. The process then jumps to step S112.

Step S112: The CPU 105 assigns new display numbers to every picture in each GOP. The display numbers are assigned serially starting from "0" in each GOP.

Step S113: The CPU 105 records the data stored in the buffer for the fast-forward reproduction onto the HDD 102 whereby the fast-forward file data and the original file data are stored correlatively. The CPU 105 writes the name of the original file data and the name of the fast-forward file data into the stream table. The CPU 105 also writes the addresses of I-pictures in the original file and those of the fast-forward file in the offset table correlatively.

[1-2] A Transmission Process

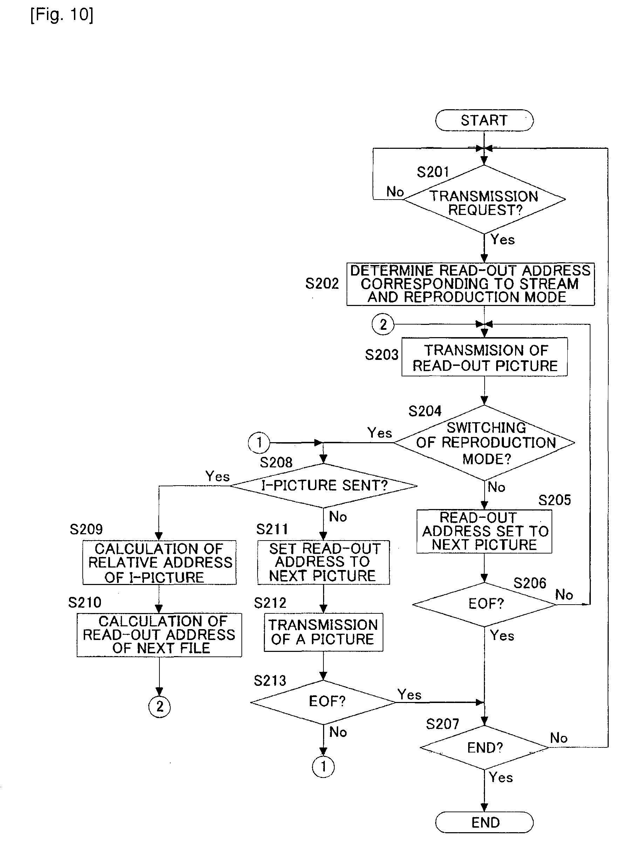

Fig. 10 illustrates a flow chart of the transmission process executed by the CPU 105 in the transmission server 10. This process is initiated by the starting of the transmission server 10.

Step S201: The CPU 105 waits for the transmission request from the reproduction apparatus 20 and jumps to step S202 upon receiving such transmission request. The transmission request includes a stream ID and a reproduction mode.

Step S202: The CPU 105 determines the head address of a file corresponding to the requested stream ID and reproduction mode as the read-out address by referring to the stream table. Concretely, the CPU 105 sends a request to Operation System (OS) to read out the file from its file head.

Step S203: The CPU 105 starts reading-out and transmits pictures from the read-out address. The CPU 105 reads out one picture from the read-out address, and transmits such picture to the reproduction apparatus 20 via the communication interface 106.

Step S204: The CPU 105 determines whether the transmission server 10 received a mode switching request from the reproduction apparatus 20. If the transmission server 10 has received a mode switching request, the process jumps to step S208 described below.

Step S205: If there is no mode switching request, the CPU 105 will read-out from the address that is one picture ahead.

Step S206: The CPU 105 determines whether the new read-out address indicates the end of file (hereinafter "EOF").

Step S207: If the new read-out address indicates an EOF, the CPU 105 determines if this process should end or not. The process will terminate in a case such as when the transmission server 10 is turned off. The CPU 105 waits for the next transmission request if the new read-out address indicates EOF.

Step S208: The CPU 105 determines whether the latest picture sent out is an I-picture when the transmission server receives a mode switching request. In other words, the CPU 105 determines whether the picture transmitted in the step S203 was an I-picture or not.

Step S209: When the picture was an I-picture, the CPU 105 calculates a relative address of the current read-out address which is relative to the head address of the current file. "The current read-out address" hereby is an address of the I-picture transmitted in the step S203.

Step S210: The CPU 105 reads out a new relative address from the offset table according to the current reproduction mode, the calculated relative address in the step S209, and the newly requested reproduction mode. The CPU 105 calculates a read-out address in a file to be reproduced next, based on the read-out new relative address. The read-out address in the file to be read-out next for reproduction is an initial address of the picture next to the I-picture identical to the I-picture transmitted in the step S203. In addition, the CPU 105 requests OS to read out the next file. Concretely, the CPU 105 sends a read-out request of the file to OS together with a file name corresponding to the requested reproduction mode and the calculated read-out address. The process then returns to step S203 and the CPU 105 reads out and transmits the pictures from the read-out address one after another.

Step S211: The CPU 105 sets the read-out address to the head address of the next picture when the latest transmitted picture was not an I-picture.

Step S212-213: The CPU 105 proceeds to read-out and transmit the next picture until the end of the file. The CPU 105 determines whether the transmitted picture was an I-picture or not when a picture was transmitted to the reproduction apparatus 20 (S208). If the transmitted picture was an I-picture, the CPU 105 calculates the read-out address of a file to be read-out next (S209-S210). Accordingly, the read-out address of the next stream data is the head address of a picture next to an I-picture which is a next I-picture to the transmitted I-picture.

This process enables the transmission server 10 to transmit a video data stream which is requested by the reproduction apparatus 20. The transmission server 10 reads out and transmits a file corresponding to the next reproduction mode when it receives a mode switching request during the transmission of another file. The transmission server 10 then switches the files at an I-picture in the current file between an I-picture in the next file. In this embodiment, the next file is read-out from the head address of a picture which is next to an I-picture. This switching effectively prevents deterioration of image quality when the files are switched.

[2] A Process Executed by Reproduction Apparatus

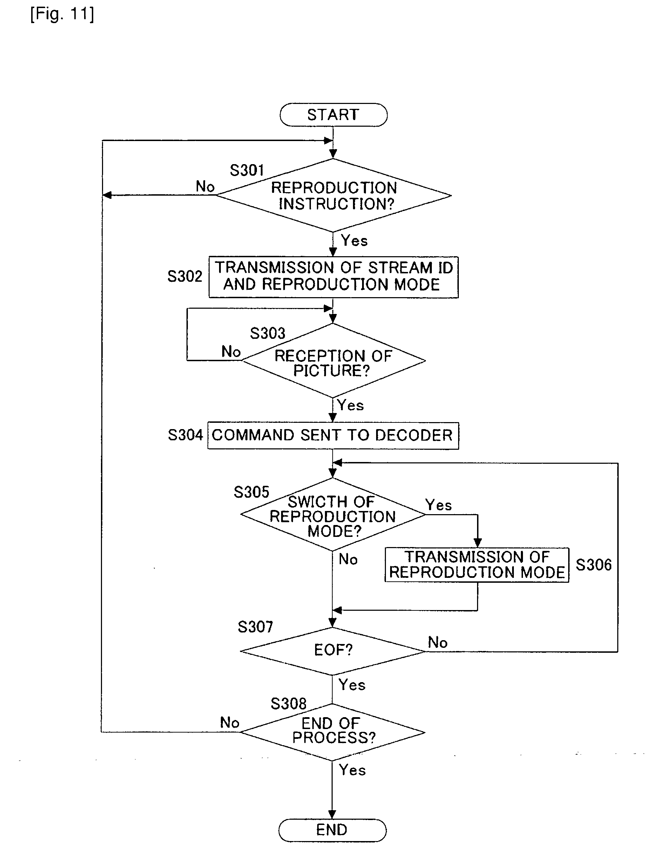

Fig. 11 illustrates a flow chart of a process executed by the CPU 205 in the reproduction apparatus 20. This process is initiated by switching on the reproduction apparatus 20.

Step S301: The CPU 205 waits for a reproduction instruction from the input interface 207. This process jumps to step S302 upon the reproduction instruction. The reproduction instruction includes a stream ID and a reproduction mode.

Step S302: The CPU 205 transmits a transmission request to the transmission server 10 via the communication interface 206. The transmission request includes the input stream ID and the reproduction mode.

Step S303-S304: The CPU 205 waits for pictures from the transmission server 10 (S303), and sends a command to the MPEG decoder 208a to decode pictures received via the communication interface 206 (S304). The MPEG decoder 208a decodes the received pictures in a stream identified by the stream ID in receiving order upon the command from the CPU 205. The decoded pictures are used to output images on the LCD 22 in display order.

Step S305-S306: The CPU 205 receives a mode switching request at any time (S305), and transmits the mode switching request to the transmission server 10 via the communication interface (S306). Pictures of a next file will be sent from the transmission server 10 upon this mode switching request. These pictures in the next file are also decoded by MPEG decoder 208a in a similar way for decoding pictures arranged in the previous file which was being decoded before the mode switching instruction.

Step S307: The CPU 205 watches whether an EOF is sent from the transmission server 10. The CPU 205 receives a mode switching instruction until receipt of an EOF (S305). Upon the reception of EOF, a command is sent to the MPEG decoder 208a to stop the decoding, and to move onto step S308.

Step S308: The CPU 205 determines if this process should end upon the reception of EOF. For example, this process is terminated when the reproduction apparatus 20 is switched off. The CPU 205 waits for the next reproduction instruction during this process.

This process also enables the reproduction apparatus 20 to output images based on the file from the transmission server 10. The reproduction apparatus 20 transmits a mode switching request to the transmission server 10 upon the acceptance of a mode switching instruction during reception of the file. The files from the transmission server 10 are switched from one to another corresponding to the reproduction mode designated by the mode switching request. Accordingly, the reproduction apparatus 20 can realize a switching of reproduction modes based on the mode switching instruction by reproducing the pictures from the transmission server 10 one after another.

In this embodiment, a mode switching request is transmitted from the reproduction apparatus 20 to the transmission server 10, and switches files to be transmitted from the transmission server 10. Decoding and outputting the pictures received from the transmission server 10 can realize a switching of reproduction modes in playback on the reproduction apparatus 20.

The second embodiment disclosing the invention

In this embodiment, encoded data files are stored in the reproduction apparatus 50. The reproduction apparatus 50 switches reproduction modes by switching files to be read-out from a storage medium. Examples of the storage medium are a hard disk in the reproduction apparatus 50 and a removable storage medium. In order to simplify the explanation, the reproduction apparatus 50 reads out encoded data files from the hard disk in this embodiment.

Hardware Configuration

Fig. 12 illustrates a hardware diagram of a reproduction apparatus 50. In this embodiment, the reproduction apparatus 50 includes a drive 501, an HDD 502, a ROM 503, a RAM 504, a CPU 505, a communication interface 506, an input interface 507, a decoder unit 508, and a BUS 510 that connects the above mentioned elements. The elements having the same functions as those of the reproduction apparatus 20 in the first embodiment are illustrated with the same names for the reproduction apparatus 50.

The drive 501 reads out encoded data files from a removable storage medium such as an optical disk. The drive 501 is an optional element for the reproduction apparatus 50.

The HDD 502 stores a plurality of encoded video data files and preferably a plurality of voice data files for each AV content.

The ROM 503 stores control programs and data necessary for executing a control program.

The RAM 504 temporarily stores the data necessary for executing the control program.

The CPU 505 manages the entire operation of the reproduction apparatus 50 by executing the control program stored in the ROM 503 on a volatile memory such as the RAM 504. For example, the CPU 505 manages the communication interface 506 so that it receives an encoded data stream from the transmission server 10, and outputs the received stream to the decoder unit 508 via the BUS 510.

The input interface 507 accepts a user operation on an operation unit 51 such as a keyboard and a mouse. An operation signal is output to the CPU 505 via the BUS 510.

The decoder unit 508 includes an MPEG decoder 508a and a video signal generation unit 508b. The MPEG decoder 508a decodes MPEG format encoded data that is input through the BUS 510 in response to a command from the CPU 505, and generates digital video data. The generated digital video data is output to the video signal generation unit 508b. The video signal generation unit 508b converts the digital video data into display data so that the display data can correspond with the number of pixels of a LCD 52. The generated display data is then output to the LCD 52 by a LCD driver (not shown).

Functional Configuration

Fig. 13 illustrates a functional diagram of the reproduction apparatus 50. The CPU 505 in the reproduction apparatus 50 enables the reproduction apparatus 50 to operate as a read-out unit 505a, an acceptance unit 505b, and a switching unit 505c. The structure of a fast-forward file will be explained first, and then each function of the reproduction apparatus 50. The ROM 503 in the reproduction apparatus 50 stores the stream table mentioned in the first embodiment, this stream table stores similar data to those explained in the first embodiment.

(a) A Fast-Forward File

(a-1)Configuration

Fig. 14(A) is an explanatory view of an original file. Fig. 14(B) is an explanatory view of a fast-forward file which is derived from the original file illustrated in Fig. 14(A). The original file and the fast-forward file are stored in a storage medium such as a removable storage medium or a hard disk. The fast-forward file in this embodiment is the same as the fast-forward file described in the first embodiment in a sense that they both are generated by removing some pictures in the closed-GOP-type or open-GOP-type original file. The difference in a fast-forward file between this embodiment and the first embodiment is whether or not the relative addresses of I-pictures arranged in each GOP are the same between an original file and a fast-forward file. This is because dummy data having the same amount of data as a removed picture is inserted into a fast-forward file of this embodiment.

Fig. 14(B) illustrates the fast-forward file generated by removing four pictures from each GOP in the original file. In addition, the fast-forward file has dummy data "PD" whose data amount is identical to that of four removed pictures.

This fast-forward file has the following advantages. This fast-forward file enables the omission of the offset table shown in the first embodiment because the relative addresses of I-pictures in different files are the same as long as they correspond to a same AV content. Therefore, the read-out address of a next file can be calculated based on a relative address of an I-picture, which is a switching position in a current file, and the head address of the next file stored in the stream table. The relative address is an address relative to the head of a file as mentioned in the first embodiment.

(a-2) Generation of a Fast-Forward File

The generation of the above-mentioned fast-forward file can be performed by the generation unit 105a in the transmission server 10 explained in the first embodiment. The generation unit 105a generates a fast-forward file with dummy data by executing the following additional steps (not shown) in addition to the steps illustrated in the flowchart in Fig.9.

An additional step counts and stores the total number of times it determines "yes" in step S109 for each GOP. Concretely, this process counts and stores the number of pictures removed from each GOP in the original file. A parameter "Pr" is newly adopted in this modified flowchart in order to indicate the number of removed pictures. The parameter Pr is initialized to 0 in step S102, and is incremented in another additional step. This step of incrementing the value of parameter "Pr" is executed by the generation unit 105a after determining "yes" at step S109 and before jumping to step S107.

Dummy data, which has the same amount of data as removed "Pr" pictures, is written into the buffer (step S107a, not shown). This step S107a is executed after step S107 and before step S111. The dummy data is written into the buffer after the removing process for each GOP is completed. Accordingly, dummy data having the same amount of data as removed pictures is consecutively arranged after the remaining pictures of each GOP in the buffer.

(b) Read-Out Unit

The read-out unit 505a reads out a file from the HDD 502 which corresponds to a stream ID and a reproduction mode provided by the input interface 507. The file is read-out from a read-out address designated by the switching unit 505c. The read-out unit 505a switches the files to be read-out from a current file to a next file upon receiving an instruction of reading-out the next file along with a read-out address thereof, while reading-out the current file. In other words, the read-out unit 505a stops reading-out the current file and starts reading-out the next file from the designated read-out address.

(c) Acceptance Unit

The acceptance unit 505b accepts the designation of a stream ID and a reproduction mode via the input interface 507. The acceptance unit 505b notifies the switching unit 505c of the designated stream ID and the reproduction mode.

(d) Switching Unit

(d-1) Notification of Read-Out Address

The switching unit 505c determines a file to be read-out based on the stream ID and the reproduction mode notified from the acceptance unit 505b. The switching unit 505c notifies the read-out unit 505a of the head address of the file to be read-out.

The switching unit 505c also determines a next file and its read-out address based upon the stream ID and the reproduction mode accepted by the acceptance unit 505b while a current file is being read-out. The next file and its read-out address are notified to the read-out unit 505a.

(d-2) The Switching Position of the Files

The switching unit 505c determines the switching positions of the current and next files. The switching unit 505c will determine two I-pictures in the current file and the next file as switching positions. The two I-pictures are identical to each other, and are arranged in the current file and the next file respectively. The switching position in the current file is preferably a first I-picture to be read-out from the current file after accepting the mode switching instruction. The switching position in the next file is a corresponding I-picture which is identical to the I-picture of the switching position in the current file. The relative address of the I-pictures of the switching positions in the current and the next files are identical.

(d-3) Calculation of the Read-Out Address

The switching unit 505c calculates the read-out address of the next file based on the determined switching positions. The read-out address of the next file may be calculated by adding the relative address of the I-picture of the switching position in the next file and the head address of the next file.

Process

Fig. 15 illustrates a flowchart of a reproduction process executed by the CPU 505 in the reproduction apparatus 50. This process is initiated, for example, by turning on the reproduction apparatus 50.

Step S401: The CPU 505 waits for a reproduction instruction from the input interface 507. The process jumps to step S402 upon receiving the reproduction instruction. The reproduction instruction includes at least one stream ID and a reproduction mode.
Step S402: The CPU 505 reads out a name of an encoded file from the stream table based on the stream ID and the reproduction mode accepted in the step S401.
Step S403: The CPU 505 starts reading-out pictures from the file identified by the file name that is read out from the stream table in the step S402. The CPU 505 also sends a command to the MPEG decoder 508a which instructs the start of decoding. The MPEG decoder 508a then starts decoding the read-out pictures in the order of them being read-out upon receiving the command. The decoded pictures are used to produce images on the LCD 52 in the order of display according to the display numbers.
Step S404-S405: The CPU 505 determines whether a mode switching instruction is input (S404). If there is no mode switching request, the CPU 505 will read-out from the address that is one picture ahead. If the CPU 505 receives the mode switching instruction, this process jumps to the step S408 mentioned below.
Step S406-S407: The CPU 505 determines whether the new read-out address indicates the end of file EOF (S406). If the new read-out address indicates EOF, the CPU 505 detemines whether this process should end or not (S407). If this process should continue, this process returns to step S401 to wait for the next reproduction in-struction. This process will terminate, for example, in a case such as when the reproduction apparatus 50 is turned off.
Step S408-S409: When the mode switching instruction is input, the CPU 505 determines whether the latest read-out picture was an I-picture (S408). In other words, the CPU 505 determines whether an I-picture was read-out and decoded in the step S403. If that is the case, the CPU 505 calculates a relative address of the current read-out address which is relative to the head address of the current file (S409). The "current read-out address" is the address of the I-picture read-out in the step S403.
Step S410: The CPU 505 requests OS to read out the next file whose name is read out from the stream table. The read-out address of the next file is the head address of a picture next to the picture whose head address is at the relative address. Then the process returns to step S403, and reading-out and decoding the pictures located at a reading address is performed in one after another.
Step S411-S413: The CPU 505 determines the "head address of the next picture" as a read-out address when the latest read-out picture was not an I-picture (S411). Further, the CPU 505 reiterates reading-out and decoding the next picture until the read-out address reaches to the end of file (S412, S413). The CPU 505 determines whether read-out picture is an I-picture when reading-out a picture (S408). When a read-out picture is an I-picture, the CPU 505 calculates a read-out address of the next file (S409-S410). Therefore, the relative address of the read-out point of the next file is identical with the relative address of the beginning of a picture next to an I-picture which is read-out after an I-picture read-out in step S408.

In this way, the reproduction apparatus 50 switches files to be read-out from a storage medium upon accepting the mode switching instruction, and represents images.

The third embodiment

In this embodiment, an explanation about switching encoded files for reproduction from an original file to a reverse file will be given. As mentioned in the first embodiment, the transmission server 10 included in the transmission system 100 and communicates with a reproduction apparatus 20 in the system 100 via a network 30, switches the encoded files. The transmission server 10 also stores a reverse file as a trick play file in addition to an original file. The hardware configuration and the function configuration of the transmission server 10 and the reproduction apparatus 20 are substantially the same as those explained in the first embodiment other than the fact that the generation unit 105a in the transmission server 10 further generates a reverse file. The configuration of a reverse file, switching of encoded files between a reverse file and an original file, and generation process of a reverse file will be explained below.

(a) Configuration of a Reverse File

A reverse file is an encoded data file for reproduction in a reverse mode at n-(n=1) times play speed. A plurality of reverse files can be generated for different trick play speeds.

Fig. 16(A) is an explanatory view of an original file which is derived from a source video data. Fig. 16(B) is an explanatory view of a reverse file which is derived from the same source video data. The reverse file is generated from a source video data unlike a fast-forward file. A source video data is a low-compression or a non-compression AV data, and includes a plurality of frames. Each frame has an odd field and an even field, and is corresponding to each picture arranged in an MPEG2 file. In this embodiment, I, P, and B-pictures are arranged in the order of IBBPBBPBBPBB.... in the original file and the reverse file.

Fig. 16(A) illustrates an original file. The numbers, which are assigned to each picture in the Fig. 16(A), are serial numbers and indicate the display order of each frame in the source video data. The serial numbers start from the first picture of a first GOP in Fig. 16(A) in order to simplify the explanation, although they actually start from the head of a file. Each GOP basically includes a same number of pictures in one GOP, for example the picture number P of each GOP is "12" in the Fig. 16(A). However, the picture number "$P_{last}$" of the last GOP "$GOP_{last}$" is "11" ("$P_{last}$"=11). This is because the total number of frames in a source video data is not always "k" times the picture number P (where "k" is an integer and not zero). As a result, the picture number "$P_{last}$" of the last GOP turns out to be the remainder when the number of all frames in the source video data is divided by the picture number P.

Fig. 16(B) illustrates a reverse file. The reverse file can be generated by arranging the frames in the source video data in reverse order and by MPEG2 encoding. The numbers, which are assigned to each picture in the Fig. 16(B), are serial numbers and indicate the display order of each frame in the source video data. The values of the serial numbers in a reverse file therefore gradually become smaller toward the end. Each GOP in the reverse file has the same number of pictures as that of GOPs in the original file, for example the picture number of each GOP is "12" in this embodiment. However, the picture number P1 of the first GOP "$GOP_1$" is "10" (P1=10). The process for determining the picture number P1 will be explained later.

(b) Switching of the Reproduction Modes

Fig. 17(A), 17(B), and 17(C) are explanatory views illustrating a switch from an original file to a reverse file. Fig. 17(A) shows pictures that are read-out from the original file when the reproduction mode is a normal play mode. The transmission server 10 receives a mode switching request for a reverse mode from the reproduction apparatus 20 when reading out "GOPi" from the original file. "GOPi" is "i$^{th}$" GOP and the second last GOP among the original file. In this embodiment, first all pictures in GOPi are read-out upon receiving the mode switching request, including picture B10. which is arranged at the last in GOPi. Then a file to be read-out is switched to the reverse file.

Fig. 17(B) shows pictures that are read-out from the reverse file when the reproduction mode is a reverse mode. The pictures in the reverse file are read-out one after another from the first picture 110 in the second GOP "GOP2", transmitted to and output on the reproduction apparatus 20. However, output of the pictures B 12, B 11 in GOP2 is skipped at the reproduction apparatus 20 since these pictures refer to pictures among GOP1 in the reverse file.

Fig. 17(C) is an explanatory view of pictures output on the reproduction apparatus 20 before and after the reproduction mode is switched.

Setting a broken_link_bit to "1" allows the reproduction apparatus 20 to skip the output of the pictures B12, B11 in GOP2 of the reverse file. The broken_link_bit is arranged in each header of each GOP in the reverse file. This setting enables skipping the output of pictures in a GOP referring to other pictures in other GOPs. Eventually, an open-GOP type and a closed-GOP type can be used as a reverse file.

A consecutive numbering of serial numbers for pictures to be read-out before and after the switching of the reproduction mode facilitates smoother playback when the reproduction mode is switched. In Fig. 17(C), the serial number consecutively increases "...9, 10, 11 before the switching of the reproduction mode, and consecutively decreases "10, 9, 8..." after the switching of the reproduction mode. The last serial number in the original file and the first serial number in the reverse file are consecutive before and after the switching of the reproduction mode. This consecutive change in serial numbers of output pictures realizes smoother playback when switching the reproduction mode: Although serial number before and after the switching of the reproduction mode are not necessarily consecutive, the smaller the difference between the last serial number in a pre-switched file and the first serial number in a post-switched file is, the smoother playback will be performed when switching the reproduction mode.

(c) Generation of a Reverse File

Fig. 18 is an explanatory view of a reverse file generated from a source video data. The generation process of the reverse file includes four steps: (i) arrangement of frames in the source video data, (ii) grouping, (iii) determination of parameters used for encoding, and (iv) encoding. Each step will be explained below.

(i) Arrangement of Frames in the Source Video Data

The generation unit 105a in the transmission server 10 generates "reverse-source-video" data by rearranging frames in the source video data in reverse order. Fields included in each frame are also rearranged in the reverse order in time sequence.

Fig. 19(A) and 19(B) are an explanatory view of fields rearranged in reverse order in time sequence. "OF" in the Fig. 19 indicates an odd field, and "EF" in the Fig. 19 indicates an even field. The Fig. 19(A) illustrates one method of rearranging fields, which is deleting the top line, and adding a dummy line DL1 as a bottom line in each odd field in each frame. The Fig. 19(B) illustrates another method of rearranging fields, which is deleting the bottom line, and adding a dummy line DL2 as a top line in each even field in each frame. The value of the dummy lines DL1, DL2 may be black, or the same value of a line next to a dummy line in the odd or even field.

(ii) Grouping

The generation unit 105a generates groups by grouping frames in the reverse-source-video data. These groups correspond to GOPs in the reverse file to be generated. Each group basically contains the same number of frames as that of pictures in each GOP of the original file. However, the first group and the last group contain frames whose number is defined by the following formulas where $P_{last}$ is the number of pictures in the last GOP in the original file, and K is the number of B-pictures consecutively follows the fist I-picture in each GOP in the original file:

(the number of frames in the first group)=$P_{last}$-K+ (in the case of ($P_{last}$-K+1)>0)
(the number of frames in the first group)=$P_{last}$-K+1+P (in the case of ($P_{last}$-K+1)=<0)
(the number of frames in the last group)= K-1 (in the case of (K-1)>0)
(the number of frames in the last group)=K-1+P (in the case of (K-1)=<0)

This embodiment shows an example of $P_{last}$=11, K=2. The grouping by using the above-mentioned formulas makes the last GOP in the original file to correspond to the first GOP "GOP1" in the reverse file. Further, this grouping also makes $J^{th}$ GOP "GOPj" in the original file to correspond to $H^{th}$ GOP "GOPh" in the reverse file, which means that the first picture of GOPh in the reverse file is read-out when switching the reproduction modes during performing read-out of the pictures in GOPj from the original file. The relationship of H and J is defined by the following formulas where L is the total number of GOPs included in the original file:

H=L-J+1 (in the case of ($P_{last}$-K+1)>0)
H=L-J (in the case of ($P_{last}$-K+1)=<0)

Fig. 20 is an explanatory view of a switching table. The correspondence of GOPs in the original file to GOPs in the reverse file may be stored as a switching table. This table facilitates a quick determination of a GOP to be read-out immediately after switching the reproduction mode.

(iii) Determination of Parameters Used for Encoding

The generation unit 105a sends a picture pattern of I, P, and B to MPEG encoder 109 which has the same value of "K" as the original file. This designation of a picture pattern allows GOPs to have the same value of "K" as that of the original file except for the case in which the last GOP has pictures less than "K+1" and thus has different value of "K". The picture pattern of I, P, and B is determined so that the serial number of the first I-picture of $H^{th}$ group in the reverse-source-video data fulfills the following formula (1). This limitation to the serial number keeps the difference between the serial numbers of pre-switching and post-switching small.

(The serial number of the second last P-picture in Jth GOP in the original file)

=<(The serial number of the first I-picture in Hth group in the reverse-source-video

data)

=<(The serial number of the first I-picture in (J+1)th GOP in the original file) ......(1)

Preferably, the picture pattern of I, P, and B is determined so that the serial numbers of I-pictures in the reverse-source-video data fulfill the following formula (2).

(The serial number of the last P-picture in Jth GOP in the original file)

=<(The serial number of the first I-picture in Hth group in the reverse-source-video

data)

=<(The serial number of the first I-picture in (J+1)th GOP in the original file) ......(2)

In the above formula (2), since the serial number of the last P-picture in $J^{th}$ GOP in the original file and the serial number of the first I-picture in $H^{th}$ group in the reverse-source-video data are serial, it facilitates smoother playback when switching the reproduction mode.

Concrete explanation will be given with reference to Fig. 17. Fig. 17 illustrates an example in which J=i, H=2. The serial number of the first I-picture in GOP2 is "10". The serial number of the second last P-picture in GOPi in the original file is "8". The serial number of the first I-picture in the $(i+1)^{th}$ GOP in the original file is "14". Therefore, the serial number of the first I-picture in GOP2 is preferably "8" or more and "14" or less.

More preferable example in order to perform smoother playback when switching the reproduction modes is when the serial number of the last P-picture in GOPi in the original file is "11", so that the serial number of the first 1-picture of GOP2 is preferably "11" or more and "14" or less. The serial number of the first I-picture in GOP2 in the reverse-source-video data is further preferably "10". This is serial to "11" and smaller than "11". Accordingly, smooth playback is performed when switching the reproduction mode.

(iv) Encoding

The generation unit 105a outputs the reverse-source-video data to the MPEG encoder 109 together with parameters used for encoding. The parameters include serial numbers of I-pictures and the picture pattern of I, P, and B. The MPEG encoder 109 encodes the frames rearranged in the reverse order in time sequence based on the input parameters, and generates a reverse file. The reverse file is stored in the HDD 102, for example.

Process

Fig. 21 illustrates a flowchart of a method for generating a reverse file executed by the CPU 105 whereby the CPU 105 functions as the generation unit 105a. This process is initiated, for example, when new source video data is written in to the HDD 102.

Step S501: The CPU 105 read out the source video data from the HDD102.
Step S502: The CPU 105 generates reverse-source-video data by rearranging the frames and fields in each frame in the source video data in reverse order.
Step S503: The CPU 105 groups the frames in the reverse-source-video data. First, the numbers of pictures in the first GOP, the last GOP, and other GOPs are determined. Then, grouping is performed according to the determined picture numbers.
Step S504: The CPU 105 determines parameters used for encoding the reverse-source-video data.
Step S505: The CPU 105 outputs the parameters determined in the step S504 to the MPEG encoder 109. Then, the MPEG encoder 109 generates the reverse file.

In this way, the transmission server 10 generates a reverse file for reverse reproduction at n-(n=1) times playback.

Further embodiments

(A) In the first embodiment mentioned above, the original file and a fast-forward file are stored in the HDD 102. Alternatively, these files may be stored in the removable storage medium. In such a case, the transmission server 10 obtains encoded data files from the removable storage medium or outside resource, and transmits them to the reproduction apparatus 20. A stream table and an offset table are preferably also stored in the same storage medium where encoded data files are stored thereon.

(B) Unlike the first and second embodiments, it is possible to generate a fast-forward file by removing pictures from an original file which are encoded and decoded by referencing preceding frames. For example, a fast-forward file can be generated by removing P-pictures from an MPEG 2 format original file.

A P-picture may be removed when there are no B-pictures proceeding to or subsequent to the P-picture and when it is the last P-picture in a GOP. Accordingly, a P-picture may be removed from a GOP in order of reverse sequence when reproduction at the desired play speed cannot be performed even if all B-pictures are removed in a GOP.

A fast-forward file can be generated likewise from an original file which has no B-pictures. The fast-forward file can be obtained by removing P-pictures from the original file in the order of a reverse sequence.

(C) Unlike the first and second embodiments, a fast-forward file can be generated independently from an original file. The following will consider two cases- firstly, the case when an I-picture is arranged at a fixed position in each GOP in the sequence of pictures, and secondly, the case when an I-picture is generated at random positions in each GOP in the original file.

(C-1) Since a CPU manages an encoder so that it arranges an I-picture at the fixed position in each GOP in an original file, it assigns a picture pattern of I, P, and B to an encoder so that reproduction at a designated play speed can be performed and an I-picture can be arranged at the fixed position in each GOP. This enables an encoder to generate an original file and a fast-forward file independently. It is also possible that two encoders generate an original file and a fast-forward file separately.

(C-2) In this case, a main encoder, a sub-encoder and an outside circuit are employed in a computer which generates the original and fast-forward files. The computer can execute the processes illustrated in Fig. 22(A) and Fig. 22(B). In the process of Fig. 22(A), the main encoder generates the original file (step S601). The sub-encoder generates the fast-forward file. The outside circuit outputs to the sub-encoder time information indicating timing at which the main encoder generates an I-pictures. In addition, the outside circuit removes pictures so that the designated reproduction speed can be realized. The number of pictures to be removed is output from the main encoder to the sub-encoder (step S602). The removed pictures are pictures other than I-pictures encoded by the main encoder. The main encoder preferably notifies the generation of an I-picture to the outside circuit so that the outside circuit can selectively remove pictures (step S603). This notification enables generation of an offset table which associates an address of an I-picture in the original file with an address of a corresponding I-picture in a fast-forward file.

The process of Fig. 22(B) includes the same steps S601 and S602 as the process in Fig. 22(A). After the step S602, the outside circuit can also input predetermined dummy data into the sub-encoder as it removes pictures (step S604). This process enables the relative addresses of I-pictures arranged in each GOP to be identical between an original file and a fast-forward file.

(D) The present invention encompasses a program for executing the method discussed above on a computer, as well as a computer readable storage medium to which such a program is recorded. The program may be downloadable. Examples of storage medium include a computer readable/writable flexible disk, a hard disk, semiconductor memory, a CD-ROM, a DVD and a magnet-optic disk (MO).

While only selected embodiments have been chosen to illustrate the present invention, it will be apparent to those skilled in the art from this disclosure that various changes and modifications can be made herein without departing from the scope of the invention defined in depended claims. Furthermore, the detailed descriptions of the embodiments according to the present invention provided for illustration only, and not for the purpose of limiting the invention as defined by the present claims and specifications.

**Industrial Applicability**

The present invention is preferably applied to reproduction of digital video data.

**Claims**

1. A data generating method comprising:

   - generating normal play data by encoding low-compression or non-compression video data (105a, S601), the normal play data including intra frames (I) and non-intra frames (P, B), the intra frames (I) being decoded independently and the non-intra frames (P, B) being decoded by referencing preceding and/or subsequent frames;
   - generating fast-forward data (105a, S604), the fast-forward data including intra frames (I) of the normal play data, a part of the non-intra frames of the normal play data,
   **characterised in that**:

   said fast-forward data also including dummy data (PD) which replace the remaining non-intra frames included only in the normal play data,
   wherein each intra frame (I) in the normal play data and each intra frame (I) in the fast-forward data have the same relative address which is relative to the heads of the normal play data and the fast-forward data respectively (S604).

2. A data generating method according to claim 1, wherein the fast-forward data is generated (S604) by selectively obtaining a part of the non-intra frames and the intra frames while the non-intra frames and intra frames are being generated one after another in the step of generating the normal play data.

3. A data generating method according to claim 1 or 2,
   wherein said dummy data have the same data amount as a corresponding replaced non-intra frame.

**Patentansprüche**

1. Datenerzeugungsverfahren, umfassend:

   - Erzeugen von Normalwiedergabedaten durch Kodieren von niedrig komprimierten oder nicht komprimierten Videodaten (105a, S601), wobei die Normalwiedergabedaten Intrabilder (I) und Nichtintrabilder (P, B) einschließen, wobei die Intrabilder (I) unabhängig dekodiert werden und die Nichtintrabilder (P, B) durch Bezugnahme auf vorhergehende und/oder nachfolgende Bilder dekodiert werden;
   - Erzeugen von Schnellvorlaufdaten (105a, S604), die Intrabilder (I) der Normalwiedergabedaten und einen Teil der Nichtintrabilder der Normalwiedergabedaten enthalten, **dadurch gekennzeichnet, dass** die Schnellvorlaufdaten auch Blinddaten (PD) enthalten, die die verbleibenden Nichtintrabilder ersetzen, die nur in den Normalwiedergabedaten enthalten sind, wobei jedes Intrabild (I) in den Normalwiedergabedaten und jedes Intrabild in den Schnellvorlaufdaten dieselbe relative Adresse hat, die relativ zu den Köpfen der Normalwiedergabedaten bzw. der Schnellvorlaufdaten ist (S604).

2. Datenerzeugungsverfahren nach Anspruch 1, bei dem die Schnellvorlaufdaten durch wahlweises Erhalten eines Teils der Nichtintrabilder und der Intrabilder erzeugt werden (S604), während die Nichtintrabilder und Intrabilder nacheinander in dem Schritt der Erzeugung der Normalwiedergabedaten erzeugt werden.

3. Datenerzeugungsverfahren nach Anspruch 1 oder 2, bei dem die Blinddaten dieselbe Datenmenge haben wie ein entsprechendes ersetztes Nichtintrabild.

**Revendications**

1. Un procédé de génération de données comprenant :

   - la génération de données de lecture normale par codage de données vidéo à faible compression ou sans compression (105a, S601), les données de lecture normale comprenant des trames intra (I) et des trames non intra (P, B), les trames intra (I) étant décodées indépendamment et les trames non intra (P, B) étant décodées en référençant des trames antérieures et/ou subséquentes ;
   - la génération de données de lecture avant (105a, S604), les données de lecture avant comprenant des trames intra (I) des données de lecture normale, une partie des trames non intra des données de lecture normale, **caractérisé en ce que** : lesdites données de lecture avant comprennent aussi des données factices (PD) qui remplacent les trames non intra restantes incluses seulement dans les données de lecture normale, dans lequel chaque trame intra (I) des données de lecture normale et chaque trame intra (I) des données de lecture avant possèdent la même adresse relative qui est relative aux têtes des données de lecture normale et des données de lecture avant respectivement (S604).

2. Un procédé de génération de données selon la revendication 1, dans lequel les données de lecture avant sont générées (S604) en obtenant de manière sélective une partie des trames non intra et des trames intra alors que les trames non intra et les trames intra sont en cours de génération les unes après les autres dans l'étape de génération des données de lecture normale.

3. Un procédé de génération de données selon la revendication 1 ou 2, dans lequel lesdites données factices possèdent le même nombre de données qu'une trame non intra correspondante remplacée.

[Fig. 1]

[Fig. 2]

EP 2 186 328 B1

10

TRANSMISSION SERVER

| 101 | 102 | 103 | 104 | 105 |
|---|---|---|---|---|
| DRIVE | HDD | ROM | RAM | CPU |

110

COMMUNICATION I/F
106

INPUT I/F
107

MPEG DECODER
108a

MPEG ENCODER
109

VIDEO SIGNAL GENERATION UNIT
108b

DECODER UNIT
108

30

OPERATION UNIT
11

LCD
12

20 — REPRODUCTION APPARATUS

[Fig. 3]

[Fig. 4]

[Fig. 5]

EP 2 186 328 B1

*(A)*

AN ORIGINAL FILE

00000000 — GOP1 — 00013629 — GOP2

| PICTURE TYPE | I1 | B2 | B3 | P4 | B5 | B6 | P7 | B8 | B9 | P10 | B11 | B12 | I1 | B2 | B3 | P4 | B5 |
|---|---|---|---|---|---|---|---|---|---|---|---|---|---|---|---|---|---|
| DISPLAY NUMBER | 2 | 0 | 1 | 5 | 3 | 4 | 8 | 6 | 7 | 11 | 9 | 10 | 2 | 0 | 1 | 5 | 3 |

*(B)*

A FAST-FORWARD FILE

00000000 — 000010843

X — X — X — X

| PICTURE TYPE | I1 | B3 | P4 | B5 | B6 | P7 | B9 | P10 | B11 | I1 | B3 | P4 | B5 | ··· |
|---|---|---|---|---|---|---|---|---|---|---|---|---|---|---|
| DISPLAY NUMBER | 1 | 0 | 4 | 2 | 3 | 6 | 5 | 8 | 7 | 1 | 0 | 4 | 2 | ··· |

GOP1 — GOP2

[Fig. 6]

EP 2 186 328 B1

(A)

AN ORIGINAL FILE

00000000     GOP1     00013629     GOP2

| PICTURE TYPE | I1 | B2 | B3 | P4 | B5 | B6 | P7 | B8 | B9 | P10 | B11 | B12 | I1 | B2 | B3 | P4 | B5 | ... |
|---|---|---|---|---|---|---|---|---|---|---|---|---|---|---|---|---|---|---|
| DISPLAY NUMBER | 2 | 0 | 1 | 5 | 3 | 4 | 8 | 6 | 7 | 11 | 9 | 10 | 2 | 0 | 1 | 5 | 3 | ... |

(B)

A FAST-FORWARD FILE

00000000     00009560

| PICTURE TYPE | I1 | B3 | P4 | B6 | P7 | B9 | P10 | B12 | I1 | B3 | P4 | ... |
|---|---|---|---|---|---|---|---|---|---|---|---|---|
| DISPLAY NUMBER | 1 | 0 | 3 | 2 | 5 | 4 | 7 | 6 | 1 | 0 | 3 | ... |

GOP1     GOP2

[Fig. 7]

| STREAM ID |
|---|
| ORIGINAL FILE NAME |
| FAST-FORWARD FILE NAME |

*(A)*

| GOP NUMBER | DISPLAY NUMBER | ORIGINAL FILE ADDRESS | FAST-FORWARD FILE ADDRESS |
|---|---|---|---|
| 1 | 2 | 0000 | 0000 |
| 2 | 2 | 0012 | 0009 |
| 3 | 2 | 0024 | 0018 |
| ⋮ | ⋮ | ⋮ | ⋮ |

*(B)*

[Fig. 8]

[Fig. 9]

START

S101 CALCULATE A STEP NUMBER "S"

S102 READ OUT ONE GOP, NSKIP=-S

S103 READ-OUT PARAMETER N=0

S104 READ OUT A PICTURE

S105 I-PICTURE OR P-PICTURE? — No

Yes

S106 WRITE READ-OUT PICTURE INTO BUFFER

S109 N≧NSKIP+S? — No

Yes

S110 NSKIP←N

S107 PICTURE WITH DISPLAY NUMBER "N" EXISTS? — Yes

No

S108 IINCREMENT DISPLAY NUMBER N TO N+1

S111 NEXT GOP? — Yes

No

S112 ASSIGN NEW DISPLAY NUMBERS

S113 RECORD DATA IN BUFFER ONTO HDD

END

[Fig. 10]

[Fig. 11]

START

S301 REPRODUCTION INSTRUCTION?
No
Yes

S302 TRANSMISSION OF STREAM ID AND REPRODUCTION MODE

S303 RECEPTION OF PICTURE?
No
Yes

S304 COMMAND SENT TO DECODER

S305 SWICTH OF REPRODUCTION MODE?
Yes
No

TRANSMISSION OF REPRODUCTION MODE S306

S307 EOF?
No
Yes

S308 END OF PROCESS?
No
Yes

END

[Fig. 12]

EP 2 186 328 B1

[Fig. 13]

[Fig. 14]

EP 2 186 328 B1

00000000                                                                 00013629

AN ORIGINAL
FILE

| PICTURE TYPE | I1 | B2 | B3 | P4 | B5 | B6 | P7 | B8 | B9 | P10 | B11 | B12 | I1 | B2 | B3 | P4 | B5 | ··· |
| DISPLAY NUMBER | 2 | 0 | 1 | 5 | 3 | 4 | 8 | 6 | 7 | 11 | 9 | 10 | 2 | 0 | 1 | 5 | 3 | ··· |

GOP1                                                          GOP2

*(A)*

00000000                                          PD          00013629

A FAST-FORWARD
FILE

| PICTURE TYPE | I1 | B3 | P4 | B5 | P7 | B9 | P10 | B12 | | | | | I1 | B3 | P4 | B6 | P7 | ··· |
| DISPLAY NUMBER | 1 | 0 | 3 | 2 | 5 | 4 | 7 | 6 | | | | | 1 | 0 | 3 | 2 | 5 | |

GOP1                                                          GOP2

*(B)*

[Fig. 15]

EP 2 186 328 B1

[Fig. 16]

**(A)**

| I2 | GOPi (P=12) | | | | | | | GOPlast (Plast=11) | | | | | | | | | | | | | |
|----|----|----|----|----|----|----|----|----|----|----|----|----|----|----|----|----|----|----|----|----|----|
| | B0 | B1 | P5 | B3 | B4 | P8 | B6 | B7 | P11 | B9 | B10 | I14 | B12 | B13 | P17 | B15 | B16 | P20 | B18 | B19 | P22 | B21 |

**(B)**

| I20 | GOP1 (P=10) | | | | | | | | | GOP2 (P=12) | | | | | | | | | | | | GOP3 (P=12) |
|-----|----|----|----|----|----|----|----|----|----|----|----|----|----|----|----|----|----|----|----|----|----|----|
| | B22 | B21 | P17 | B19 | B18 | P14 | B16 | B15 | P13 | I10 | B12 | B11 | P7 | B9 | B8 | P4 | B6 | B5 | P1 | B3 | B2 | . . . |

[Fig. 17]

EP 2 186 328 B1

| GOPi (P=12) | | | | | | | | | | | | GOPlast (P=11) | | | | | | | | | | | |
|---|---|---|---|---|---|---|---|---|---|---|---|---|---|---|---|---|---|---|---|---|---|---|---|
| I2 | B0 | B1 | P5 | B3 | B4 | P8 | B6 | B7 | P11 | B9 | B10 | I14 | B12 | B13 | P17 | B15 | B16 | P20 | B18 | B19 | P22 | B21 | |

▲ A MODE SWITCHING  ▲ READ OUT PICTURES UNTIL B10
REQUEST

*(A)*

| GOP1 (P=11) | | | | | | | | | | | GOP2 (P=12) | | | | | | | | | | | GOP3 (P=12) |
|---|---|---|---|---|---|---|---|---|---|---|---|---|---|---|---|---|---|---|---|---|---|---|
| I20 | B22 | B21 | P17 | B19 | B18 | P14 | B16 | B15 | P13 | I10 | B12 | B11 | P7 | B9 | B8 | P4 | B6 | B5 | P1 | B3 | B2 | · · · |

▲ READ OUT PICTURES FROM THE FIRST PICTURE "I10" IN GOP2

*(B)*

| B0 | B1 | I2 | B3 | B4 | P5 | B6 | B7 | P8 | B9 | B10 | P11 | I10 | B9 | B8 | P7 | B6 | B5 | P4 | B3 | B2 | P1 | B | · · · |
|---|---|---|---|---|---|---|---|---|---|---|---|---|---|---|---|---|---|---|---|---|---|---|---|

◄─────────────────────────────►◄────────────────────────────►
DECODE AND OUTPUT ORIGINAL FILE       DECODE AND OUTPUT REVERSE FILE

*(C)*

[Fig. 18]

EP 2 186 328 B1

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|---|----|----|----|----|----|----|----|----|----|----|----|----|----|

↓ ARRANGEMENT OF FRAMES IN SOURCE VIDEO DATA

| 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|----|----|----|----|----|----|----|----|----|----|----|----|----|---|---|---|---|---|---|---|---|---|---|

↓ GROUPING

| GOP1 (P=10) | | | | | | | | | | GOP2 (P=12) | | | | | | | | | | | | GOP3 (P=12) |
|----|----|----|----|----|----|----|----|----|----|----|----|----|---|---|---|---|---|---|---|---|---|---|
| 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 · · · |

↓ DETERMINE PARAMETERS FOR ENCODING

| GOP1 (P=10) | | | | | | | | | | GOP2 (P=12) | | | | | | | | | | | | GOP3 (P=12) |
|----|----|----|----|----|----|----|----|----|----|----|----|----|---|---|---|---|---|---|---|---|---|---|
| 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 · · · |
| B | B | I | B | B | P | B | B | P | P | B | B | I | B | B | P | B | B | P | B | B | P | BBI· · · |

↓ ENCODING

| GOP1 (P=11) | | | | | | | | | | GOP2 (P=12) | | | | | | | | | | | GOP3 (P=12) |
|-----|-----|-----|-----|-----|-----|-----|-----|-----|-----|-----|-----|-----|----|----|----|----|----|----|----|----|---|
| I20 | B22 | B21 | P17 | B19 | B18 | P14 | B16 | B15 | P13 | I10 | B12 | B11 | P7 | B9 | B8 | P4 | B6 | B5 | P1 | B3 | B2 | · · · |

[Fig. 19]

(A)

(B)

[Fig. 20]

| GOPs NUMBER IN AN ORIGINAL FILE | GOPs NUMBER IN A REVERSE FILE |
|---|---|
| J | $L-J+1$　( Plast$-K+1>0$ ) |
| J | $L-J$　( Plast$-K+1 \leqq 0$ ) |

[Fig. 21]

```
                    ( START )
                         |
                         v
S501    +--------------------------------------+
        |     READ OUT SOURCE VIDEO DATA       |
        +--------------------------------------+
                         |
                         v
        +--------------------------------------+
        |   GENERATE REVERSE-SOURCE-VIDEO      |
S502    |   DATA BY REAARANGING FRAMES AND     |
        |        FIELDS IN EACH FRAME          |
        +--------------------------------------+
                         |
                         v
        +--------------------------------------+
S503    |   GROUPING OF FRAMES IN REVERSE-     |
        |        SOURCE-VIDEO DATA             |
        +--------------------------------------+
                         |
                         v
        +--------------------------------------+
S504    |       DETERMINE PARAMETERS           |
        |         FOR ENCODING                 |
        +--------------------------------------+
                         |
                         v
        +--------------------------------------+
S505    |  GENERATE REVERSE FILE BY ENCODING   |
        +--------------------------------------+
                         |
                         v
                    (  END  )
```

[Fig. 22]

START

S601 | GENERATE AN ORIGINAL FILE

S602 | OUTPUT THE NUMBER OF PICTURES TO BE REMOVED

S603 | SELECTIVELY REMOVE PICTURES TO GENERATE A FAST-FORWARD FILE, AND GENERATE AN OFFSET TABLE

END

*(A)*

START

S601 | GENERATE AN ORIGINAL FILE

S602 | OUTPUT THE NUMBER OF PICTURES TO BE REMOVED

S604 | INPUT DUMMY DATA INTO SUB-ENCODER TO GENERATE A FAST-FORWARD FILE

END

*(B)*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06133262 B
- JP H11155129 B

- WO 0235832 A